# FASCICULE DE BREVET EUROPEEN

(11) **EP 3 268 691 B1**
(45) Date de publication et mention de la délivrance du brevet: **30.09.2020**
(21) Numéro de dépôt: 16712749.7
(22) Date de dépôt: 14.03.2016
(51) Int. Cl.: F41G 3/14, G01S 3/784, G01S 5/16, G01S 5/18

(54) **EQUIPEMENT AÉROPORTÉ DE DÉTECTION DE TIRS ET D'AIDE AU PILOTAGE**
LUFTGESTÜTZTE VORRICHTUNG ZUR DETEKTION VON SCHÜSSEN UND ZUR NACHWEIS UND ZUR STEUERUNGSASSISTENZ
AIRBORNE DEVICE FOR DETECTING SHOTS AND FOR PILOTING ASSISTANCE

(30) Priorité: 12.03.2015 FR 1500470
(43) Date de publication de la demande: 17.01.2018
(73) Titulaire: Safran Electronics & Defense SAS, 92100 Boulogne-Billancourt (FR)
(72) Inventeur: COLENTIER, Sylvie, 92100 Boulogne Billancourt (FR); KLING, Emmanuel, 92100 Boulogne Billancourt (FR); REYMOND, Georges-Olivier, 92100 Boulogne Billancourt (FR); NEGRONI, Sylvain, 92100 Boulogne Billancourt (FR)
(74) Mandataire: Cabinet Le Guen Maillet
(86) Numéro de dépôt international: PCT/EP2016/055404
(87) Numéro de publication internationale: WO 2016/142549

(56) Documents cités:
- GB-A- 2 006 463
- US-A- 5 686 889
- US-A1- 2008 291 075
- US-A1- 2012 242 864
- US-A1- 2013 099 096
- US-A1- 2014 184 806
- US-B1- 6 215 731
- US-B1- 6 232 602
- US-B1- 7 617 022

## Description

La présente invention concerne un procédé combiné d'aide au pilotage et de détection de tirs et un équipement aéroporté pour un aéronef apte à mettre en œuvre ledit procédé.

Il est connu des aéronefs, tels que des hélicoptères ou des avions, comprenant des systèmes de détection de tirs et des systèmes d'aide au pilotage. Les systèmes de détection de tirs permettent de détecter si un aéronef est pris à partie par un tir d'arme légère, d'arme lourde ou par un tir de missile.

L'article « Localisation d'un tireur en utilisant des capteurs acoustiques asynchrones (« Sniper Localization Using Acoustic Asynchronous Sensors » en terminologie anglo-saxonne), Damarla, T.; Kaplan, L.M.; Whipps, G.T., Sensors Journal, IEEE, vol.10, no.9, pp.1469,1478, Sept. 2010) décrit une méthode de localisation d'un tireur basée sur des capteurs acoustiques. La méthode s'appuie sur une mesure d'écart entre un bruit d'embouchure de canon de fusil (« muzzle blast » en terminologie anglo-saxonne) et un bruit appelé « onde de Mach » (appelé aussi « onde de choc » ou « onde de choc de Mach » ou « onde balistique »). L'onde de Mach (« shock wave » en terminologie anglo-saxonne) correspond à un bang supersonique provoqué par un projectile ayant une vitesse supersonique. Cette méthode est inadaptée dans un contexte d'aéronef tel qu'un hélicoptère car un hélicoptère génère un bruit qui couvrirait le bruit d'embouchure. Par ailleurs, des problèmes d'imprécision de la localisation ont souvent été rapportés pour les méthodes de localisation de tireurs basées sur des systèmes acoustiques.

L'article « un système acoustique de localisation de tireur (« an acoustic sniper localization system » en terminologie anglo-saxonne), Gervasio Prado; Hardave Dhaliwal; Philip O. Martel; Proc. SPIE 2938, Command, Control, Communications, and Intelligence Systems for Law Enforcement, 318 (February 18, 1997) » décrit un système de localisation de tireurs basé lui aussi sur des détections des bruits d'embouchure et/ou des ondes de Mach à partir de capteurs acoustiques. Cet article aborde les problèmes d'imprécision des systèmes acoustiques et propose de compléter la localisation utilisant des capteurs acoustiques par une localisation utilisant des capteurs infrarouges. Une méthode de localisation mise en œuvre par le système consiste à localiser une zone de provenance d'un tir en utilisant les capteurs acoustiques. Un capteur infrarouge est ensuite pointé sur la zone de provenance pour localiser précisément une origine du tir. Cette méthode nécessite donc une localisation en deux temps puisqu'une localisation basée sur les capteurs acoustiques est suivie d'une localisation basée sur le capteur infrarouge. Ce système engendre donc une latence qui peut être dommageable lorsqu'un tir nécessite une réaction très rapide d'un opérateur, d'un soldat ou d'un pilote d'un aéronef.

Par ailleurs, un aéronef doit pouvoir voler dans diverses conditions climatiques, et notamment dans des conditions climatiques n'offrant pas une bonne visibilité (nuit, pluie, neige, brouillard, fumée, poussière, etc.). Les systèmes d'aide au pilotage permettent à un pilote de naviguer plus facilement dans de mauvaises conditions climatiques. Les systèmes d'aide au pilotage couvrent notamment les systèmes de vision nocturne, les systèmes de détection d'obstacles, et les systèmes de détection de balises et de feux de signalisation.

La détection de tirs (hostiles ou non hostiles) et l'aide au pilotage sont deux domaines différents faisant appel à des expertises différentes, ce qui explique que les systèmes de détection de tirs et d'aide au pilotage soient actuellement développés indépendamment. Un aéronef est donc en général équipé de deux systèmes séparés, un premier système étant dédié à la détection de tirs et un second système étant dédié à l'aide au pilotage. Une telle séparation entraîne de nombreux problèmes comme des problèmes de volume occupé par les deux systèmes, d'agencement des deux systèmes sur un aéronef et des problèmes de poids. Par ailleurs, le développement séparé des deux systèmes empêche de rechercher d'éventuelles synergies pouvant exister entre un système d'aide à la navigation et un système de détection de tirs. US6232602 divulgue un équipement aéroporté d'aide au pilotage pour un aéronef.

US2013/099096 et US2012/242864 divulguent des équipements de détection de tirs.

Il est souhaitable de pallier ces différents inconvénients de l'état de la technique.

D'une manière générale, il est souhaitable de réduire le volume et le poids des systèmes de détection de tirs et d'aide au pilotage pour qu'ils soient plus facilement intégrables à un aéronef. Il est souhaitable de plus de tirer parti de synergies éventuelles entre un système de détection de tirs et un système d'aide au pilotage.

Selon un premier aspect de l'invention, l'invention concerne un équipement aéroporté de détection de tirs et d'aide au pilotage pour un aéronef comprenant: un système multi-capteurs fournissant des signaux représentatifs d'un environnement de l'aéronef comprenant : au moins un système, dit système LWIR/MWIR, fournissant un signal, dit signal LWIR/MWIR, représentatif d'un rayonnement infrarouge compris dans l'infrarouge lointain ou dans l'infrarouge moyen ; au moins un système, dit système NIR, fournissant un signal, dit signal NIR, représentatif d'un rayonnement infrarouge compris dans le proche infrarouge ; et, au moins un système acoustique fournissant un signal acoustique ; des moyens de traitement comprenant : des moyens d'aide au pilotage permettant d'obtenir des premières informations de pilotage comprenant des informations représentatives d'obstacles présents dans l'environnement de l'aéronef ; et, des moyens de détection de tirs permettant d'obtenir des secondes informations de pilotage comprenant des informations représentatives de tirs dans un voisinage de l'aéronef, les moyens d'aide au pilotage et les moyens de détection de tir utilisant des signaux représentatifs d'un environnement de l'aéronef comprenant au moins le signal LWIR/MWIR ; et, des moyens d'obtention pour obtenir des paramètres d'aide au pilotage à partir de premières et secondes informations de pilotage; les moyens de détection de tirs comprenant : des moyens de recherche pour rechercher des singularités dans des signaux représentatifs d'un environnement de l'aéronef, comprenant des moyens pour rechercher une première singularité dans un premier signal compris dans les signaux représentatifs d'un environnement de l'aéronef et des moyens pour rechercher une deuxième singularité dans au moins un deuxième signal compris dans les signaux représentatifs d'un environnement de l'aéronef ; des moyens de détermination pour déterminer, en utilisant un résultat des moyens de recherche, si un évènement correspondant à un type d'évènement recherché a été détecté ; des moyens de localisation pour déterminer une localisation géographique d'une origine d'un évènement détecté utilisant des informations fournies par les moyens d'aide au pilotage ; et des moyens d'obtention pour obtenir des secondes informations de pilotage en fonction d'un type d'un évènement détecté et d'une localisation géographique d'une origine dudit évènement.

L'équipement aéroporté est donc un équipement permettant une détection de tirs et une aide au pilotage. Cet équipement aéroporté bénéficie d'une synergie entre la détection de tirs et l'aide au pilotage car les moyens de détection de tirs réutilisent des informations obtenues par les moyens d'aide au pilotage pour déterminer une localisation géographique d'une origine d'un évènement. Par ailleurs, les moyens d'aide au pilotage et les moyens de détection de tirs utilisent un signal fourni par un même système, i.e. le signal LWIR/MWIR fourni par au moins un système LWIR/MWIR. Une telle mise en commun d'un système LWIR/MWIR permet une réduction de taille et de poids de l'équipement aéroporté.

Selon un mode de réalisation, chaque système LWIR/MWIR comprend un dispositif optique, dit dispositif optique LWIR/MWIR, et un dispositif d'acquisition, dit dispositif d'acquisition LWIR/MWIR, fournissant un signal LWIR/MWIR sous forme d'images, dites images LWIR/MWIR, chaque système NIR comprend un dispositif optique, dit dispositif optique NIR et un dispositif d'acquisition, dit dispositif d'acquisition NIR, fournissant un signal NIR sous forme d'images, dites images NIR, le système multi-capteurs comprenant un nombre de systèmes LWIR/MWIR et de systèmes NIR dépendant d'une résolution respective des images LWIR/MWIR et NIR à obtenir.

De cette manière, il est possible d'atteindre des résolutions d'images LWIR/MWIR ou NIR suffisantes pour l'aide au pilotage et la détection de tirs.

Selon un mode de réalisation, chaque dispositif d'acquisition LWIR/MWIR comprend un capteur bolométrique apte à capter le signal LWIR/MWIR.

Un capteur bolométrique permet de capter de manière continue un signal LWIR/MWIR.

Selon un deuxième aspect de l'invention, l'invention concerne une pluralité d'équipements aéroportés selon le premier aspect, permettant, en combinant les images LWIR/MWIR, d'obtenir une image représentative d'un panorama à 360°, dit panorama LWIR/MWIR, autour de l'aéronef et permettant, en combinant les images NIR, d'obtenir une image représentative d'un panorama à 360°, dit panorama NIR, autour de l'aéronef. De cette manière, un pilote de l'aéronef obtiendra des informations d'aide au pilotage et des informations de détection de tirs provenant d'un voisinage à 360° autour de l'aéronef.

Selon un troisième aspect de l'invention, l'invention concerne un procédé combiné d'aide au pilotage et de détection de tirs, mis en œuvre par un équipement aéroporté intégré à un aéronef. Le procédé comprend les étapes suivantes : acquérir des signaux représentatifs d'un environnement de l'aéronef comprenant : un signal, dit signal LWIR/MWIR, représentatif d'un rayonnement infrarouge compris dans l'infrarouge lointain ou dans l'infrarouge moyen, fourni par un système, dit système LWIR/MWIR ; un signal, dit signal NIR, représentatif d'un rayonnement infrarouge compris dans le proche infrarouge, fourni par un système, dit système NIR; et, un signal acoustique fourni par un système acoustique ; mettre en œuvre une procédure d'aide au pilotage et une procédure de détection de tirs, la procédure d'aide au pilotage permettant d'obtenir des premières informations de pilotage comprenant des informations représentatives d'obstacles présents dans l'environnement de l'aéronef et la procédure de détection de tirs permettant d'obtenir des secondes informations de pilotage comprenant des informations représentatives de tirs dans un voisinage de l'aéronef, la procédure d'aide au pilotage et la procédure de détection de tirs utilisant des signaux représentatifs de l'environnement de l'aéronef comprenant au moins le signal LWIR/MWIR ; obtenir des paramètres d'aide au pilotage à partir des premières et secondes informations de pilotage; la procédure de détection de tirs comprenant les étapes suivantes : rechercher des singularités dans les signaux représentatifs de l'environnement de l'aéronef, la recherche des singularités comprenant une recherche d'une première singularité dans un premier signal compris dans les signaux représentatifs de l'environnement de l'aéronef et, une recherche d'une deuxième singularité dans au moins un deuxième signal compris dans les signaux représentatifs d'un environnement de l'aéronef; lorsqu'un résultat de la recherche des singularités montre qu'un évènement correspondant à un type d'évènement recherché s'est produit, déterminer une localisation géographique d'une origine dudit évènement en utilisant des informations obtenues lors de la mise en œuvre de la procédure d'aide au pilotage ; obtenir les secondes informations de pilotage en fonction dudit type et de la localisation géographique de l'origine dudit événement.

Le procédé combine donc une fonction de détection de tirs et une fonction d'aide au pilotage. Comme pour le système selon le premier aspect, le procédé bénéficie de synergie entre une procédure de détection de tirs et une procédure d'aide au pilotage puisque la procédure de détection de tirs réutilise des informations fournies par la procédure d'aide au pilotage pour déterminer une localisation géographique d'une origine d'un évènement. Par ailleurs, le signal LWIR/MWIR fourni par au moins un système LWIR/MWIR est utilisé par la procédure d'aide au pilotage et la procédure de détection de tirs. La procédure d'aide au pilotage et la procédure de détection de tirs utilisent donc conjointement le même système LWIR/MWIR, ce qui représente un gain de volume et de poids pour l'équipement aéroporté.

Selon un mode de réalisation, le système NIR fournit le signal NIR sous forme d'images, dites images NIR, le système LWIR/MWIR fournit le signal LWIR/MWIR sous forme d'images, dites images LWIR/MWIR, et une singularité est présente dans le signal NIR lorsqu'un flash de lumière est détecté dans au moins une image NIR, une singularité est présente dans le signal LWIR/MWIR lorsqu'un flash de lumière est détecté dans au moins une image LWIR/MWIR, et une singularité est présente dans le signal acoustique lorsqu'une onde de Mach est détectée dans le signal acoustique.

Selon un mode de réalisation, lorsque la recherche d'au moins une singularité dans les signaux représentatifs d'un environnement de l'aéronef, permet de détecter un premier flash de lumière dans au moins une image LWIR/MWIR et un second flash de lumière, corrélé spatialement et temporellement avec le premier flash de lumière, dans au moins une image NIR, l'évènement est identifié comme un reflet solaire et ne correspond pas à un évènement recherché.

De cette manière, un évènement, qui n'aurait pas d'intérêt pour l'aide au pilotage ou la détection de tirs, est écarté.

Selon un mode de réalisation, lorsque la recherche d'au moins une singularité dans les signaux représentatifs d'un environnement de l'aéronef permet de détecter un premier flash de lumière dans le signal LWIR/MWIR, aucun second flash de lumière corrélé avec le premier flash de lumière n'ayant été détecté dans le signal NIR, l'évènement est identifié comme un tir et correspond à un évènement recherché.

Selon un mode de réalisation, lorsque, suite à l'identification d'un évènement correspondant à un tir et à la détermination de la localisation géographique de l'origine dudit évènement, une onde de Mach ayant une corrélation temporelle avec le premier flash de lumière est détectée dans le signal acoustique, l'évènement est identifié comme un tir en direction de l'aéronef, la localisation géographique de l'origine dudit évènement étant utilisée pour déterminer un niveau de corrélation temporelle entre le premier flash de lumière et l'onde de Mach.

Les informations de localisation géographique de l'origine du tir obtenues en utilisant les informations fournies par la procédure d'aide au pilotage permettent donc de déterminer si une onde de Mach est corrélée temporellement avec le premier flash de lumière.

Selon un mode de réalisation, lorsque la recherche d'au moins une singularité dans les signaux représentatifs d'un environnement de l'aéronef permet de détecter un second flash de lumière dans le signal NIR, aucun premier flash de lumière corrélé avec le second flash de lumière n'ayant été détecté dans le signal LWIR/MWIR, l'évènement est identifié comme une détection d'un feu de signalisation et correspond à un évènement recherché.

La procédure de détection de tirs permet donc aussi de détecter des feux de signalisation grâce à l'utilisation du système NIR.

Selon un mode de réalisation, une information de durée d'un flash de lumière est associée à chaque flash de lumière, la durée du flash de lumière étant utilisée pour affiner l'identification du type de l'évènement.

Une utilisation de la durée d'un flash de lumière permet donc d'obtenir une procédure de détection de tirs plus fiable.

Selon un mode de réalisation, une information de fréquence de répétition d'un flash de lumière est associée à chaque détection de flash de lumière, la fréquence de répétition étant utilisée pour affiner l'identification du type de l'évènement.

Une utilisation de la fréquence de répétition d'un flash de lumière permet donc d'obtenir une meilleure classification de l'arme utilisée pour les tirs détectés.

Selon un mode de réalisation, lorsque l'évènement identifié correspond à un tir, les paramètres d'aide au pilotage obtenus comprennent une information représentative d'une zone de portée du tir et/ou une direction de sortie d'une zone de portée du tir.

Selon un mode de réalisation, lorsque l'évènement identifié correspond à une détection d'un feu de signalisation, les paramètres d'aide au pilotage obtenus comprennent une information représentative d'une zone d'évitement du feu de signalisation et/ou une information représentative d'un temps d'évitement correspondant à une estimation d'un temps qu'il faudrait à l'aéronef pour atteindre une zone d'évitement du feu de signalisation et/ou une direction d'évitement d'une zone d'évitement du feu de signalisation.

Selon un mode de réalisation, le procédé est mis en œuvre par l'équipement aéroporté selon le premier aspect ou par chaque équipement aéroporté de l'aéronef selon le deuxième aspect.

Selon un quatrième aspect de l'invention, l'invention concerne un programme d'ordinateur, caractérisé en ce qu'il comprend des instructions pour mettre en œuvre, par un dispositif, le procédé selon le troisième aspect, lorsque ledit programme est exécuté par un processeur dudit dispositif.

Selon un cinquième aspect, l'invention concerne des moyens de stockage, caractérisés en ce qu'ils stockent un programme d'ordinateur comprenant des instructions pour mettre en œuvre, par un dispositif, le procédé selon le troisième aspect, lorsque ledit programme est exécuté par un processeur dudit dispositif.

Les caractéristiques de la présente invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un exemple d'implantation dans un aéronef d'au moins un équipement aéroporté de détection de tirs et d'aide au pilotage;
- la Fig. 2 illustre schématiquement un premier exemple d'équipement aéroporté de détection de tirs et d'aide au pilotage selon l'invention ;
- la Fig. 3 illustre schématiquement un système fournissant un signal représentatif d'un rayonnement infrarouge compris dans l'infrarouge lointain (« Long Wavelength Infrared (LWIR) » en terminologie anglo-saxonne) ou dans l'infrarouge moyen (« Médium Wavelength Infrared (MWIR) » en terminologie anglo-saxonne). ;
- la Fig. 4 illustre schématiquement un système fournissant un signal représentatif d'un rayonnement infrarouge compris dans le proche infrarouge (« Near Infrared (NIR) » en terminologie anglo-saxonne) ;
- la Fig. 5 illustre schématiquement une architecture matérielle d'un module de traitement apte à mettre en œuvre un procédé combiné d'aide au pilotage et de détection de tirs ;
- la Fig. 6A illustre schématiquement un exemple de procédé combiné d'aide au pilotage et de détection de tirs ;
- la Fig. 6B illustre schématiquement un exemple de procédé de recherche d'au moins une singularité dans des signaux représentatifs d'un environnement d'un aéronef ;
- la Fig. 6C illustre schématiquement un exemple de procédé d'obtention d'informations de pilotage en fonction d'un type et d'une localisation géographique d'une origine d'un évènement détecté ;
- la Fig. 7 illustre schématiquement un deuxième exemple d'équipement aéroporté de détection de tirs et d'aide au pilotage selon l'invention ;
- la Fig. 8 illustre schématiquement un troisième exemple d'équipement aéroporté de détection de tirs et d'aide au pilotage selon l'invention ; et,
- la Fig. 9 illustre schématiquement un exemple d'implantation mécanique d'un équipement aéroporté de détection de tirs et d'aide au pilotage selon l'invention.

La description détaillée ci-après s'attache à décrire différents modes de réalisation de la présente invention dans un contexte d'un hélicoptère. Les principes de la présente invention s'appliquent cependant dans un contexte plus large. Les principes de la présente invention sont en effet applicables à tout aéronef pour lequel une détection de tirs et une aide au pilotage sont utiles tels qu'un dirigeable, un avion, un planeur, une montgolfière, un drone, une fusée, un missile, etc.

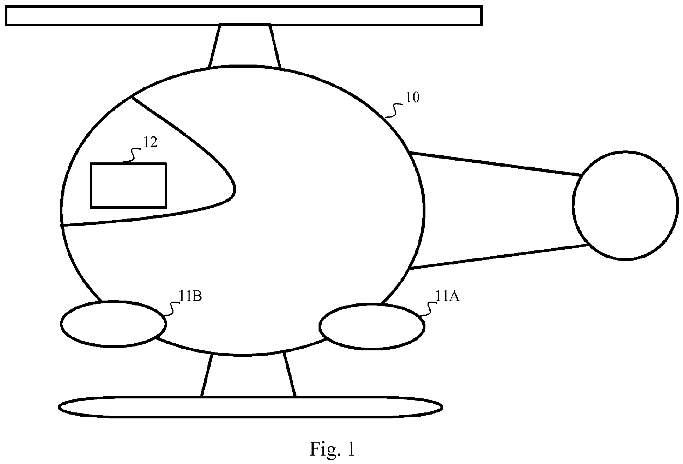

La **Fig. 1** illustre schématiquement un exemple d'implantation dans un aéronef 10 d'au moins un équipement aéroporté de détection de tirs et d'aide au pilotage. Chaque équipement aéroporté de détection de tirs et d'aide au pilotage est adapté à la détection de différents types de tirs tels que des tirs d'armes légères d'infanterie, des tirs d'artillerie, des tirs de lance-roquettes (« Rocket Propelled Grenade (RPG) » en terminologie anglo-saxonne) et des tirs de missiles sol-air.

Dans cet exemple, l'aéronef 10 est un hélicoptère. L'aéronef 10 comprend deux équipements aéroportés de détection de tirs et d'aide au pilotage 11A et 11B. Par la suite, pour simplifier, nous appelons chaque équipement aéroporté de détection de tirs et d'aide au pilotage, équipement aéroporté. Dans l'exemple de la Fig. 1, les équipements aéroportés sont répartis à l'avant et à l'arrière de l'aéronef 10. Un aéronef comporte en général un nombre d'équipements aéroportés permettant de couvrir un panorama cylindrique correspondant à un champ optique de « 360° » autour de l'aéronef. Par ailleurs, l'aéronef 10 comprend un dispositif d'affichage 12 tel qu'un écran, un afficheur tête haute ou des lunettes électroniques permettant d'afficher des données issues des équipements aéroportés 11A et 11B.

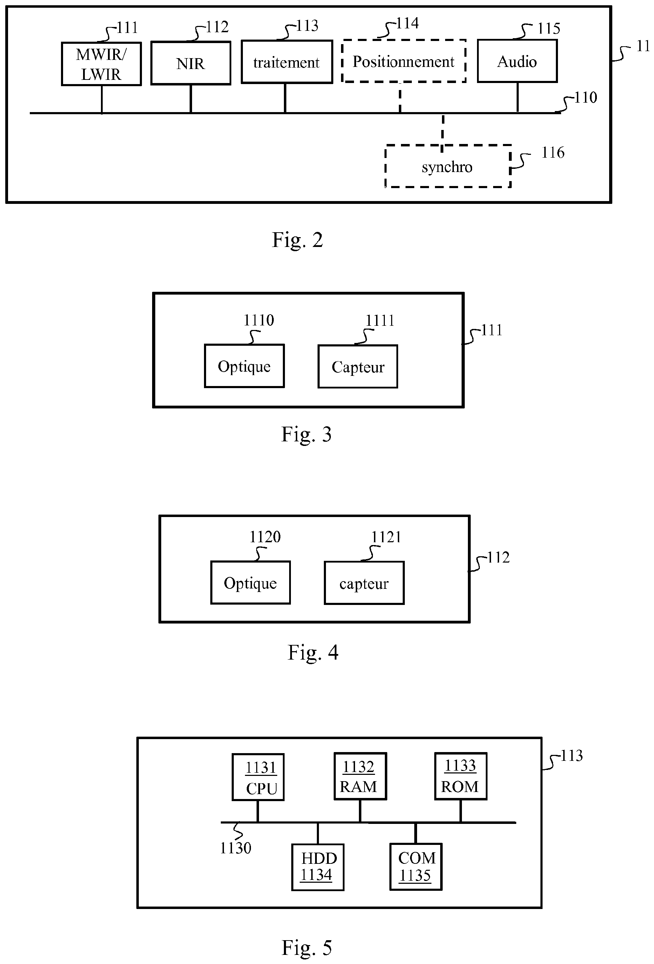

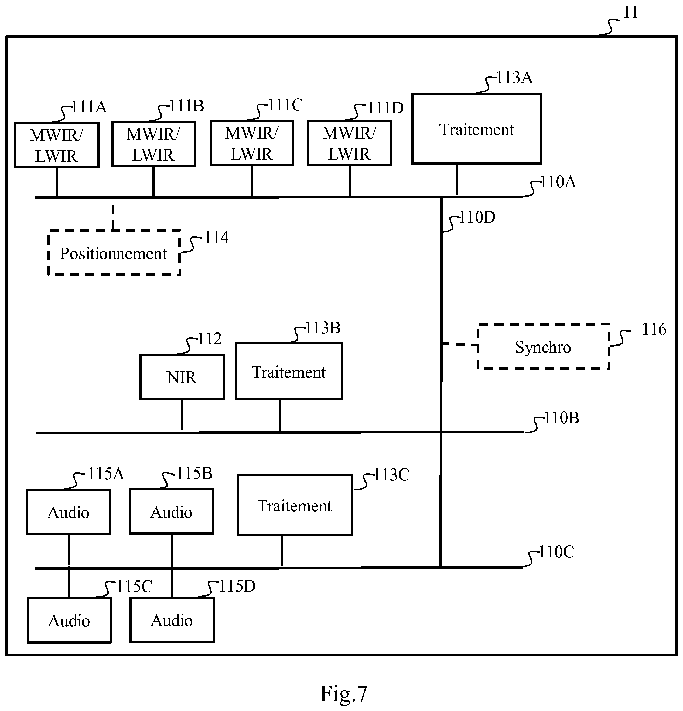

La **Fig. 2** illustre schématiquement un premier exemple d'équipement aéroporté 11 de détection de tirs et d'aide au pilotage selon l'invention. L'équipement aéroporté 11 comprend, relié par un bus de communication 110, un module de traitement 113 et un système multi-capteurs comprenant un système 111, dit système LWIR/MWIR, que nous décrivons par la suite en relation avec la Fig. 3, un système 112, dit système NIR, que nous décrivons par la suite en relation avec la Fig. 7, et un système acoustique 115 fournissant un signal acoustique.

Dans un mode de réalisation particulier, l'équipement aéroporté 11 comprend en outre un dispositif de positionnement 114. Le dispositif de positionnement 114 fournit des informations représentatives d'une position, d'une orientation et d'une vitesse de l'aéronef 10 utilisées dans une procédure d'aide au pilotage mise en œuvre par l'équipement aéroporté 11. Ce dispositif de positionnement 114 peut, par exemple, être une unité de mesure par inertie (UMI).

Dans un mode de réalisation, les systèmes LWIR/MWIR 111, NIR 112, acoustique 115, et le dispositif de positionnement 114 lorsqu'il est présent, sont synchronisés temporellement sur une même information d'horloge fournie par exemple par le module de traitement 113. De cette manière, chaque signal issu des systèmes LWIR/MWIR 111, NIR 112, acoustique 115, et du dispositif de positionnement 114 est associé à des informations temporelles basées sur une horloge commune.

Dans un mode de réalisation, l'équipement aéroporté 11 comprend un dispositif de synchronisation 116, tel qu'un dispositif GPS (Système de positionnement global, « Global Positioning System » en terminologie anglo-saxonne) fournissant une information d'horloge permettant aux systèmes LWIR/MWIR 111, NIR 112, acoustique 115, et au dispositif de positionnement 114 lorsqu'il est présent, d'être synchronisés sur une même horloge.

Dans un mode de réalisation, le dispositif de positionnement 114 et le dispositif de synchronisation 116 sont un même dispositif tel qu'un dispositif GPS.

La **Fig. 3** illustre schématiquement un système LWIR/MWIR 111, fournissant un signal, dit signal LWIR/MWIR, représentatif d'un rayonnement infrarouge compris dans l'infrarouge lointain (« Long Wavelength Infrared (LWIR) » en terminologie anglo-saxonne) ou dans l'infrarouge moyen (« Médium Wavelength Infrared (MWIR) » en terminologie anglo-saxonne).

Le système LWIR/MWIR 111 comprend un dispositif optique 1110, dit dispositif optique LWIR/MWIR, et un dispositif d'acquisition 1111, dit dispositif d'acquisition LWIR/MWIR, fournissant le signal LWIR/MWIR sous forme d'images, dites images LWIR/MWIR.

Le dispositif d'acquisition LWIR/MWIR 1111 est mis en œuvre, par exemple, par un capteur bolométrique bi-bande, i.e. un capteur bolométrique apte à capter des rayonnements infrarouges correspondant à l'infrarouge moyen MWIR et l'infrarouge lointain LWIR. Un avantage d'un capteur bolométrique bi-bande est qu'il évite d'avoir deux capteurs, chacun des deux capteurs étant dédié à une bande infrarouge donnée. Par ailleurs, un capteur bolométrique fonctionne en continu, i.e. il capte continuellement les rayonnements infrarouges, à la différence d'autres capteurs qui échantillonnent les rayonnements infrarouges captés avec une fréquence prédéfinie.

Le dispositif optique LWIR/MWIR 1110 permet de couvrir un champ optique prédéfini, par exemple de « 120° » en horizontal et « 90° » en vertical. Chaque dispositif optique LWIR/MWIR 1110 et chaque dispositif d'acquisition LWIR/MWIR 1111 sont orientés vers une zone à observer. Les images LWIR/MWIR ont une résolution dépendant d'une résolution du dispositif d'acquisition LWIR/MWIR 1111, par exemple égale à « 512 » pixels en largeur et « 384 » pixels en hauteur.

La **Fig. 4** illustre schématiquement un système NIR 112, fournissant un signal, dit signal NIR, représentatif d'un rayonnement infrarouge compris dans le proche infrarouge (« Near Infrared (NIR) » en terminologie anglo-saxonne).

Le système NIR 112 comprend un dispositif optique 1120, dit dispositif optique NIR et un dispositif d'acquisition 1121, dit dispositif d'acquisition NIR, fournissant le signal NIR sous forme d'images, dites images NIR. Le dispositif optique NIR 1120 permet de couvrir un champ optique prédéfini, par exemple de « 120° » en horizontal et « 90°» en vertical. Chaque dispositif optique NIR 1120 et chaque dispositif d'acquisition NIR 1121 sont orientés vers une zone à observer.

Les images NIR ont une résolution dépendant d'une résolution du dispositif d'acquisition NIR 1121, par exemple égale à « 1024 » pixels en largeur et « 768 » pixels en hauteur.

On note que dans l'exemple du dispositif aéroporté 11 décrit en relation avec la Fig. 2, le champ optique couvert par le dispositif optique LWIR/MWIR 1110 est le même que le champ optique couvert par le dispositif optique NIR 1120.

La **Fig. 5** illustre schématiquement une architecture matérielle d'un module de traitement 113.

Selon l'exemple d'architecture matérielle représenté à la Fig. 5, le module de traitement 113 comprend alors, reliés par un bus de communication 1130 : un processeur ou CPU (« Central Processing Unit » en anglais) 1131 ; une mémoire vive RAM (« Random Access Memory» en anglais) 1132; une mémoire morte ROM (« Read Only Memory » en anglais) 1133 ; une unité de stockage telle qu'un disque dur ou un lecteur de support de stockage, tel qu'un lecteur de cartes SD (« Secure Digital» en anglais) 1134; au moins une interface de communication 1135, permettant par exemple au module de traitement 113 de communiquer avec les systèmes LWIR/MWIR 111, NIR 112, et acoustique 115, avec les dispositifs de positionnement 114 et de synchronisation 116 lorsqu'ils sont présents et avec un dispositif d'affichage 12.

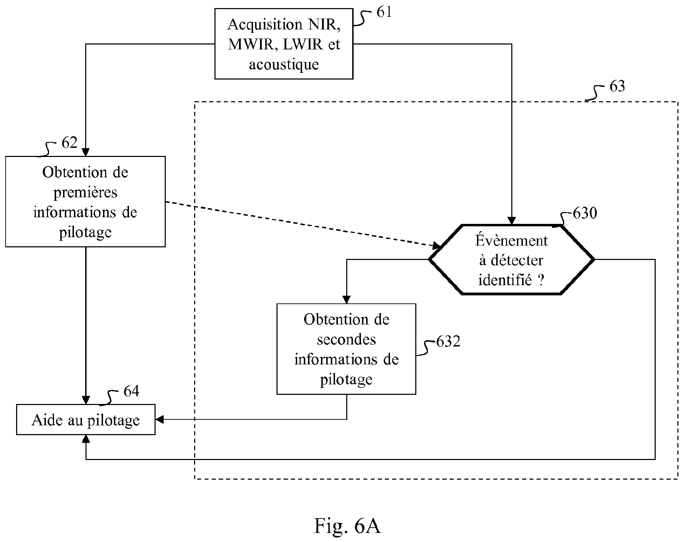

Le processeur 1131 est capable d'exécuter des instructions chargées dans la RAM 1132 à partir de la ROM 1133, d'une mémoire externe (non représentée), d'un support de stockage (tel qu'une carte SD), ou d'un réseau de communication. Lorsque l'équipement aéroporté 11 est mis sous tension, le processeur 1131 est capable de lire de la RAM 1132 des instructions et de les exécuter. Ces instructions forment un programme d'ordinateur causant la mise en œuvre, par le processeur 1131, de tout ou partie des algorithmes et étapes décrits en relation avec la Fig. 6A.

Tout ou partie de l'algorithme décrit ci-après en relation avec la Fig. 6A peut être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La **Fig. 6A** illustre schématiquement un exemple de procédé combiné d'aide au pilotage et de détection de tirs. Le procédé décrit en relation avec la Fig. 6A est mis en œuvre périodiquement par le module de traitement 113 avec une fréquence, par exemple d'une valeur de « 50 Hz », adaptée pour détecter un obstacle, un tir ou un feu de signalisation très rapidement.

Dans une étape 61, l'équipement aéroporté 11 acquiert, sous le contrôle du module de traitement 113, des signaux représentatifs d'un environnement de l'aéronef 10 à partir du système multi-capteurs.

Suite à l'étape 61, le module de traitement 113 met en œuvre une procédure d'aide au pilotage 62 et une procédure de détection de tirs 63.

La procédure d'aide au pilotage 62 permet d'obtenir des premières informations de pilotage comprenant des informations représentatives d'obstacles présents dans l'environnement de l'aéronef. Une information représentative d'un obstacle peut comprendre, par exemple, une reconstruction en trois dimensions (3D) de l'obstacle et/ou une reconstruction 3D d'un terrain au-dessus duquel évolue l'aéronef 10, le terrain étant considéré comme un obstacle.

Il est connu des procédés de reconstruction 3D d'une scène à partir d'images. Ces procédés utilisent des images offrant des points de vue différents d'une même scène. Des techniques de géométrie épipolaire sont appliquées à ces images pour obtenir une reconstruction 3D de la scène. Il existe différentes méthodes pour obtenir des images représentant des points de vue différents d'une même scène. Dans une première méthode, des images offrant des points de vue différents d'une même scène sont obtenues par un même système d'acquisition d'images, en faisant plusieurs acquisitions successives d'images de la scène à partir de points de vue différents. Dans une deuxième méthode, une pluralité de systèmes d'acquisitions d'images ayant chacun un point de vue différent sur la scène est utilisée.

Lors de la mise en œuvre de la procédure d'aide au pilotage 62 par le module de traitement 113, le module de traitement 113 applique l'un des procédés de reconstruction 3D mentionnés ci-dessus aux images LWIR/MWIR. Il est connu en effet qu'un signal infra-rouge correspondant à l'infrarouge lointain (LWIR) est particulièrement adapté pour obtenir une reconstruction 3D efficace d'un obstacle ou d'un terrain dans de mauvaises conditions de visibilité. Le système LWIR/MWIR 111 permet d'obtenir un signal LWIR/MWIR comprenant essentiellement des données représentatives de rayonnements infrarouges situés dans l'infrarouge lointain (LWIR).

La mise en œuvre d'un procédé de reconstruction 3D permet de fournir à un pilote de l'aéronef 10 une reconstruction 3D des obstacles situés au voisinage de l'aéronef 10 et/ou une reconstruction 3D d'un terrain au-dessus duquel évolue l'aéronef 10.

On note que, puisque l'équipement aéroporté 11 décrit en relation avec la Fig. 2 ne comporte qu'un système LWIR/MWIR 111, ce système LWIR/MWIR fournit successivement des images LWIR/MWIR de points de vue différents de l'environnement de l'aéronef 10 acquises à des instants différents pour permettre la mise en œuvre du procédé de reconstruction 3D. On suppose ici que l'aéronef 10 est en mouvement et que par conséquent deux images successives d'une même scène observée pas le système LWIR/MWIR, acquises à des instants différents, représentent deux points de vue différents de la même scène.

Les informations représentatives d'un obstacle obtenues lors de la mise en œuvre de la procédure de reconstruction 3D peuvent être enrichies en utilisant des informations de positionnement et de vitesse de l'aéronef 10. Les informations de positionnement et de vitesse de l'aéronef 10 sont notamment utilisées pour déterminer des informations permettant d'éviter des collisions avec des obstacles. Les informations permettant d'éviter des collisions avec des obstacles comprennent, par exemple, des informations indiquant une position relative de l'aéronef 10 par rapport à un obstacle et/ou des informations indiquant une direction d'évitement d'un obstacle, et/ou des informations indiquant un temps avant une collision avec un obstacle. Dans un mode de réalisation, les informations de positionnement, d'orientation et de vitesse de l'aéronef 10 sont fournies par le dispositif de positionnement 114. Les informations représentatives d'un obstacle, comprenant une reconstruction 3D (d'obstacles ou de terrain) et des informations permettant d'éviter des collisions avec des obstacles, permettent ainsi d'aider le pilote de l'aéronef 10 à circuler dans un environnement offrant peu de visibilité.

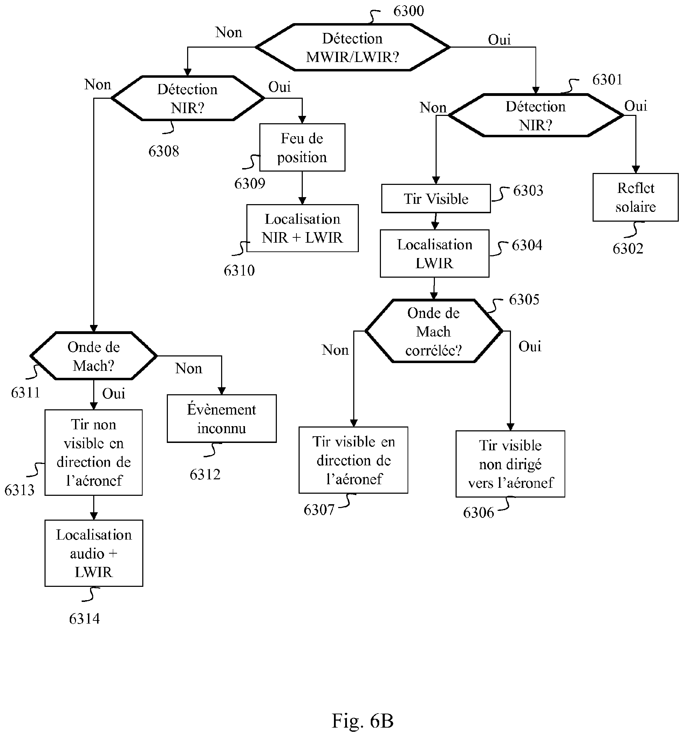

La procédure de détection de tirs 63 permet d'obtenir des secondes informations de pilotage comprenant des informations représentatives de tirs dans un voisinage de l'aéronef 10. Lors d'une mise en œuvre de la procédure de détection de tirs 63, le module de traitement 113 recherche, lors d'une étape 630, au moins une singularité dans les signaux représentatifs d'un environnement de l'aéronef 10 fournis par le système multi-capteurs. L'étape 630 de recherche d'au moins une singularité, détaillée par la suite en relation avec la Fig. 6B, permet de déterminer si un évènement correspondant à un type d'évènement recherché s'est produit au voisinage de l'aéronef et de déterminer une localisation géographique d'une origine de cet évènement.

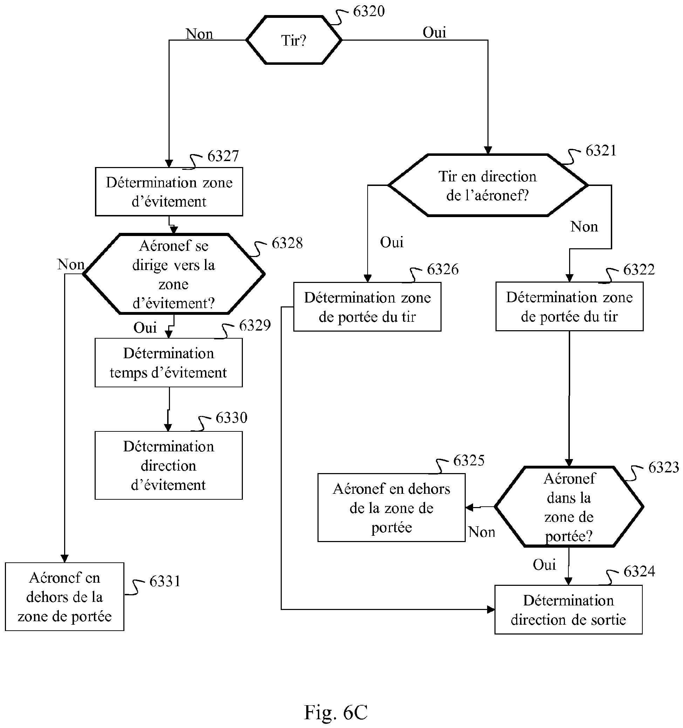

Lorsqu'un évènement correspondant à un type d'évènement recherché est identifié lors de l'étape 630, le module de traitement 113 obtient lors d'une étape 632 les secondes informations de pilotage en fonction du type et de la localisation géographique de l'origine dudit évènement. Un exemple de procédé mis en œuvre lors de l'étape 632 est décrit, par la suite, en relation avec la Fig. 6C. Le module de traitement 113 met alors en œuvre une étape 64, au cours de laquelle le module de traitement 113 affiche sur un dispositif d'affichage du pilote de l'aéronef 10 des paramètres d'aide au pilotage déterminés à partir des premières et secondes informations de pilotage. Les paramètres d'aide au pilotage comprennent, par exemple, une reconstruction 3D des obstacles ou du terrain environnant l'aéronef correspondant aux premières informations de pilotage dans laquelle sont incrustées les secondes informations de pilotage. Comme nous le décrivons par la suite en relation avec la Fig. 6C, les secondes informations de pilotage comprennent, par exemple, des informations de localisation géographiques d'origines de tirs et/ou de feux de position et/ou des informations représentatives de zones de portée de tirs et/ou de zones d'évitement de feux de position et/ou des directions de sortie de zones de portée de tirs et/ou des directions d'évitement de zones d'évitement.

Lorsqu'aucun évènement correspondant à un type d'évènement recherché n'est identifié, le module de traitement 113 met en œuvre l'étape 64 d'obtention des paramètres d'aide au pilotage en utilisant uniquement les premières informations de pilotage.

La **Fig. 6B** illustre schématiquement un exemple de procédé de recherche d'au moins une singularité dans les signaux représentatifs d'un environnement de l'aéronef 10.

Dans une étape 6300, le module de traitement 113 recherche une première singularité dans un premier signal compris dans les signaux représentatifs de l'environnement de l'aéronef 10. Dans l'exemple décrit en relation avec la Fig. 6B, le premier signal est le signal LWIR/MWIR. Dans ce cas, il est considéré qu'une singularité est présente dans le signal LWIR/MWIR lorsqu'un flash de lumière est détecté dans au moins une image LWIR/MWIR.

Un flash de lumière apparaît dans une image sous la forme d'un objet de luminance élevée sur un fond de luminance plus faible. Dans un contexte de détection de tirs ou de feux de signalisation, le flash de lumière correspond à un signal fourni par un système d'acquisition d'images correspondant à un signal lumineux provoqué par un feu de bouche ou un feu de signalisation. Pour détecter un flash de lumière dans une image, le module de traitement 113 met en œuvre une procédure de détection d'un flash de lumière. Dans un mode de réalisation, cette procédure comprend une obtention d'une image de différence correspondant à une soustraction pixel à pixel entre l'image dans laquelle on recherche un flash de lumière et une image précédente. Une recherche de forts gradients spatiaux est ensuite mise en œuvre sur l'image de différence par le module de traitement 113. Cette recherche peut comprendre, par exemple, un calcul d'un gradient de valeurs de luminance pour chaque pixel de l'image de différence. Pour ce faire, le module de traitement 113 calcule une moyenne des différences entre ledit pixel et huit pixels voisins. Lorsqu'une zone de l'image de différence possède une frontière sur laquelle de forts gradients ont été calculés, cette zone est interprétée comme un flash de lumière. Dans un mode de réalisation, l'image dans laquelle le flash est recherché et l'image précédente sont recalées par anamorphose pour compenser les déplacements de l'aéronef 10 entres les deux images.

Un flash de lumière peut avoir plusieurs causes. Certaines causes, telles qu'un reflet solaire, n'ont aucun intérêt pour la détection de tirs et ne doivent donc pas être prises en compte. Il est connu qu'un reflet solaire est visible dans un signal NIR et dans un signal MWIR ou LWIR alors qu'un flash de lumière dû à un tir est visible dans un signal MWIR, faiblement visible dans un signal LWIR, mais est invisible dans un signal NIR.

Lorsqu'une première singularité est trouvée dans le signal LWIR/MWIR, i.e. lorsqu'un premier flash de lumière est détecté dans au moins une image LWIR/MWIR, le module de traitement 113 recherche, dans une étape 6301, une deuxième singularité dans au moins un deuxième signal compris dans les signaux représentatifs de l'environnement de l'aéronef 10. Ici, la première et la seconde singularité sont issues de signaux différents. Pour que ces deux singularités permettent d'identifier un évènement recherché, il faut que ces deux singularités aient une même origine. On considère que la première et la seconde singularités ont la même origine lorsque ces deux singularités sont corrélées temporellement. Une première singularité détectée dans un signal LWIR/MWIR est considérée comme corrélée temporellement avec une seconde singularité détectée dans un signal NIR lorsque ces deux singularités correspondent à un même instant d'acquisition. Une première singularité détectée dans le signal acoustique est considérée comme corrélée temporellement avec une seconde singularité détectée dans un signal NIR (respectivement LWIR/MWIR), lorsque les instants d'acquisition de la première et de la seconde singularités sont décalés d'une durée dépendant de la différence entre la vitesse de propagation de la lumière et la vitesse de propagation du son.

Lorsque la première singularité est un flash de lumière dans une image LWIR/MWIR, la seconde singularité est recherchée dans le signal NIR. Il est considéré qu'une singularité est présente dans le signal NIR lorsqu'un flash de lumière est détecté dans au moins une image NIR. Le module de traitement 113 procède alors à une recherche d'un second flash de lumière dans une image NIR de la même manière qu'il avait recherché le premier flash de lumière dans une image LWIR/MWIR. Si un second flash de lumière corrélé spatialement et temporellement avec le premier flash de lumière est détecté dans une image NIR, le module de traitement 113 détermine lors d'une étape 6302 que le premier et le second flashs de lumière correspondent à un reflet solaire. Une détection d'un reflet solaire ne correspond pas à un évènement recherché. On considère ici qu'un premier flash de lumière dans une image LWIR/MWIR est corrélé temporellement et spatialement avec un second flash de lumière dans une image NIR si les deux flashs de lumière correspondent à un même instant et ont des positions spatiales respectives dans les images LWIR/MWIR et NIR correspondantes. La corrélation spatiale et temporelle entre le premier et le deuxième flashs de lumière permet de déterminer que les deux flashs de lumières vus dans deux images différentes (une image LWIR/MWIR et une image NIR) correspondent à un même phénomène physique, i.e. un même reflet solaire.

Si aucun second flash de lumière corrélé avec le premier flash de lumière n'est détecté dans une image NIR, le module de traitement 113 détermine, lors d'une étape 6303, que la première singularité détectée dans une image LWIR/MWIR correspond à un tir. Une détection d'un tir correspond à un évènement recherché.

Dans ce cas, dans une étape 6304, le module de traitement 113 détermine une localisation géographique d'une origine de l'évènement, i.e. d'une origine du tir. La première singularité (i.e. le premier flash de lumière) ayant permis d'identifier un évènement correspondant à un tir a été détectée dans au moins une image LWIR/MWIR. Ce premier flash de lumière est associé à une position dans chaque image LWIR/MWIR. Comme nous l'avons décrit plus haut en relation avec l'étape 620, les images LWIR/MWIR sont aussi utilisées lors de la mise en œuvre de la procédure de détection d'obstacles 62, pour réaliser une reconstruction 3D d'obstacles ou de terrains. Lorsque la reconstruction 3D utilise une image LWIR/MWIR contenant le premier flash de lumière, la position du flash de lumière dans l'image LWIR/MWIR est projetée dans la reconstruction 3D. On peut alors aisément retrouver la localisation géographique de l'origine du tir à partir de la projection de la position du premier flash de lumière dans la reconstruction 3D et des informations de positionnement, d'orientation et de vitesse de l'aéronef 10 fournies, par exemple, par le dispositif 114. En effet, la localisation géographique de l'origine du tir est obtenue de la même manière que les informations permettant d'éviter des collisions avec des obstacles.

La recherche des singularités mise en œuvre dans les étapes 6300 et 6301 a permis de déterminer qu'un tir s'est produit au voisinage de l'aéronef. Ces étapes ne permettent pas de déterminer si le tir détecté était destiné à l'aéronef.

Lors d'une étape 6305, afin de déterminer si le tir détecté était destiné à l'aéronef, le module de traitement 113 recherche dans le signal acoustique une singularité corrélée temporellement avec la première singularité, i.e. corrélée temporellement avec le premier flash de lumière détecté dans au moins une image LWIR/MWIR. Il est considéré qu'un signal acoustique comprend une singularité lorsqu'une onde de Mach est détectée dans le signal acoustique. Dans le contexte de l'invention, une onde de Mach correspond à un pic d'amplitude sonore dans un signal acoustique homogène correspondant au bruit de l'aéronef 10. Des mesures ont montré qu'un aéronef tel qu'un hélicoptère produit un signal acoustique ayant une amplitude moyenne de « 100 » db, alors qu'une onde de Mach produit un signal acoustique très court culminant à « 120 » db. Pour déterminer un niveau de corrélation entre une onde de Mach et un flash de lumière, il est nécessaire de prendre en compte un décalage temporel entre l'onde de Mach et le flash de lumière. Un signal lumineux correspondant à un feu de bouche, détecté sous forme de flash lumineux par le système LWIR/MWIR 111, parcourt quasiment instantanément la distance entre la localisation géographique de l'origine du tir et l'aéronef 10. Une onde de Mach se produit lorsqu'un projectile passe à proximité de l'aéronef 10. Le décalage temporel *T* entre l'onde de Mach et le flash de lumière correspond donc approximativement au temps mis par le projectile pour parcourir la distance *D* entre l'origine du tir et l'aéronef. Dans un mode de réalisation, on considère que le projectile possède une vitesse connue *V.* Le décalage temporel *T* peut donc être obtenu en divisant la distance *D* par la vitesse *V.* Une onde de Mach correspondant à un instant *T1* est considérée comme corrélée à un flash de lumière correspondant à un instant *T2* si une différence *T1-T2* est proche de *T.* Dans un mode de réalisation, l'onde de Mach et corrélée au flash de lumière si la différence *T1-T2* est égale à *T.*

On peut remarquer que des latences de traitement par le système LWIR/MWIR 111 et/ou par le système acoustique 115 peuvent perturber la mesure des instants T1 et T2. On considère ici que ces temps de traitement sont connus. Le temps de traitement d'un signal acoustique par le dispositif acoustique 115 est noté Δ₁. Le temps de traitement d'un signal LWIR/MWIR par le dispositif LWIR/MWIR 111 est noté Δ₂. Dans un mode de réalisation, ces temps de traitement sont pris en compte par le module de traitement 113 pour déterminer si une singularité détectée dans le signal acoustique est corrélée avec une singularité détectée dans le signal LWIR/MWIR. Dans ce mode de réalisation, l'onde de Mach est corrélée au flash de lumière si la différence (*T1*-Δ₁)-*(T2*-Δ₂) est égale à *T.*

Lorsqu'une onde de Mach corrélée avec le premier flash de lumière est détectée dans le signal acoustique, le module de traitement 113 détermine, lors d'une étape 6307, que l'évènement correspond à un tir en direction de l'aéronef 10. La détection d'une onde de Mach signifie de plus qu'un projectile est passé à proximité de l'aéronef 10 et que par conséquent l'aéronef 10 est à portée de tir. Si aucune onde de Mach corrélée avec le premier flash de lumière n'est détectée, le module de traitement 113 détermine, lors d'une étape 6306, que l'événement correspond à un tir non destiné à l'aéronef 10.

Lorsque, lors de l'étape 6300, aucune première singularité n'est détectée dans le signal LWIR/MWIR, le module de traitement 113 recherche, dans une étape 6308, une deuxième singularité dans le signal NIR. Si un flash de lumière est détecté dans au moins une image NIR, le module de traitement 113 détermine, lors d'une étape 6309, qu'un feu de signalisation a été détecté. Une détection d'un feu de position correspond à un évènement recherché.

Lors d'une étape 6310, le module de traitement 113 détermine une localisation géographique de l'origine de l'évènement détecté, i.e. détermine une localisation géographique du feu de position. Le flash de lumière détecté dans au moins une image NIR est associé à des coordonnées dans chaque image NIR. Ces coordonnées dans chaque image NIR ne sont pas suffisantes pour déterminer la localisation géographique de l'origine de l'évènement. De nouveau, pour déterminer la localisation géographique de l'origine de l'évènement, le module de traitement 113 va utiliser des informations obtenues lors de la mise en œuvre de la procédure d'aide au pilotage 62. Pour ce faire le module de traitement 113 recherche une image LWIR/MWIR correspondant temporellement à chaque image NIR dans laquelle le flash de lumière a été détecté. Les coordonnées du flash de lumière dans chaque image NIR sont ensuite projetées dans chaque image LWIR/MWIR trouvée ce qui permet d'obtenir les coordonnées du flash de lumière détecté dans au moins une image NIR dans au moins une image LWIR/MWIR. Connaissant les coordonnées du flash de lumière détecté dans au moins une image LWIR/MWIR, le module de traitement 113 détermine la localisation géographique de l'origine de l'évènement de la même manière qu'il avait déterminé la localisation géographique de l'origine d'un tir lors de l'étape 6304.

Lorsque, lors de l'étape 6308, aucune première ni seconde singularités ne sont détectées respectivement dans les signaux LWIR/MWIR et dans les signaux NIR, le module de traitement 113 recherche, dans une étape 6311, une singularité, sous forme d'une onde de Mach, dans le signal acoustique. Si aucune singularité n'est détectée dans le signal acoustique, le module de traitement 113 détermine lors d'une étape 6312, qu'aucun évènement recherché ne s'est produit au voisinage de l'aéronef 10.

Si une onde de Mach est détectée lors de l'étape 6311, le module de traitement 113 détermine, lors d'une étape 6313, qu'un tir en direction de l'aéronef 10, non visible dans le signal LWIR/MWIR, a été détecté. La détection d'une onde de Mach signifie de plus qu'un projectile est passé à proximité de l'aéronef 10 et que par conséquent l'aéronef 10 est à portée de tir. Comme nous l'avons vu plus haut, un tir en direction de l'aéronef est un évènement recherché.

Dans un mode de réalisation adapté à des aéronefs peu bruyants, le module de traitement 113 détermine une localisation géographique de l'origine de l'évènement, i.e. de l'origine du tir en appliquant des méthodes décrites dans l'article « Localisation d'un tireur en utilisant des capteurs acoustiques asynchrones (« Sniper Localization Using Acoustic Asynchronous Sensors » en terminologie anglo-saxonne), Damarla, T.; Kaplan, L.M.; Whipps, G.T., Sensors Journal, IEEE , vol.10, no.9, pp.1469,1478, Sept. 2010). Dans ce mode de réalisation, pour renforcer la précision de la localisation géographique, la localisation géographique obtenue en utilisant le signal acoustique est projetée dans la reconstruction 3D d'obstacles ou de terrains fournie par le procédé d'aide au pilotage 62.

Il est connu qu'un flash de lumière ayant pour origine une arme est visible sur une ou deux images consécutives au maximum. Des durées plus importantes sont possibles avec des calibres important tels que de l'artillerie. Une mesure d'une durée d'un flash de lumière, en termes de nombre d'images, peut donner une information qui rend la détection d'un tir plus robuste ou encore permettant d'affiner une identification d'un type d'un tir.

Par ailleurs il est aussi possible de mesurer une fréquence de répétition d'un flash de lumière. La fréquence de répétition peut aussi être utilisée pour affiner une identification d'un type d'un tir. Par exemple, un flash de lumière isolé peut être identifié comme un tir de pistolet alors qu'un flash de lumière ayant une fréquence de répétition donnée peut être interprété comme un tir émanant d'un certain type de mitrailleuse.

Dans un mode de réalisation, le module de traitement 113 mesure la fréquence de répétition et/ou la durée d'un flash de lumière et utilise la fréquence de répétition et/ou la durée mesurées pour affiner une identification d'un type d'un tir.

Le procédé décrit en relation avec la Fig. 6B débute par une recherche d'une singularité dans des images LWIR/MWIR, puis se poursuit par une recherche de singularité dans des images NIR et par une recherche de singularités dans le signal acoustique. L'ordre de recherche dans les signaux représentatifs d'un environnement de l'aéronef 10 pourrait toutefois être différent sans que cela entraîne des modifications des résultats du procédé. Le procédé pourrait, par exemple, débuter par une recherche de singularité dans les images NIR ou dans le signal acoustique.

La **Fig. 6C** illustre schématiquement un exemple de procédé d'obtention des secondes informations de pilotage en fonction du type et de l'origine géographique d'un évènement détecté.

Le procédé illustré en relation avec la Fig. 6C utilise des informations obtenues par le module de traitement 113 lors de la mise en œuvre du procédé de la Fig. 6B et que le module de traitement 113 a stockées en mémoire. Ces informations donnent des indications sur l'évènement détecté : tir visible non dirigé vers l'aéronef 10, tir visible dirigé vers l'aéronef 10, feu de position, tir non visible en direction de l'aéronef 10, aéronef 10 à portée de tir, etc.

Dans une étape 6320, le module de traitement vérifie si l'évènement détecté est un tir. Si l'évènement est un tir, le module de traitement 113 vérifie, lors d'une étape 6321, si le tir est dirigé vers l'aéronef 10.

Nous avons vu en relation avec les étapes 6307 et 6313 que le module de traitement 113 détermine qu'un tir est dirigé vers l'aéronef 10 lorsqu'une onde de Mach, corrélée avec une première singularité détectée dans le signal MWIR/LWIR, est détectée dans le signal acoustique. La détection de cette onde de Mach corrélée indique aussi que l'aéronef 10 est à portée de tir. Il est important dans ce cas de déterminer une zone de portée du tir pour s'en extraire au plus vite.

Si le tir est dirigé vers l'aéronef 10 (et que l'aéronef 10 est à portée de tir), le module de traitement 113 détermine, lors d'une étape 6326, une zone de portée du tir. La zone de portée d'un tir est une sphère ayant pour centre l'origine géographique du tir et pour rayon, la portée d'une arme ayant effectué le tir. Dans un mode de réalisation, la portée utilisée par le module de traitement 113 est une portée constante correspondant à une portée maximale mesurée lors de tests sur un ensemble d'armes conventionnelles. Des secondes informations de pilotage comprenant la position géographique de l'origine du tir et le rayon de la zone de portée sont conservées dans une mémoire du module de traitement 113.

Suite à l'étape 6326, lors d'une étape 6324, le module de traitement 113 détermine une direction de sortie de la zone de portée permettant de sortir au plus vite de la zone de portée. Pour ce faire, le module de traitement détermine, en utilisant les informations représentatives d'obstacles fournies par la procédure d'aide au pilotage 62, une direction de sortie de la zone de portée telle qu'une distance entre la position de l'aéronef et une limite de la zone de portée soit minimum, en prenant en compte d'éventuels obstacles. Les secondes informations de pilotage sont enrichies par la direction de sortie déterminée.

Si, lors de l'étape 6321, le tir n'est pas dirigé vers l'aéronef 10, le module de traitement 113 détermine une zone de portée du tir en mettant en œuvre une étape 6322 identique à l'étape 6326. Toutefois, l'absence de détection d'une onde de mach ne permet de déduire aussi rapidement si l'aéronef 10 est dans la zone de portée du tir ou en dehors de la zone de portée du tir. Connaissant la distance séparant la localisation géographique de l'origine du tir et l'aéronef 10, le module de traitement 113 détermine, lors d'une étape 6323, si l'aéronef se situe dans la zone de portée du tir ou en dehors de la zone de portée du tir.

Si l'aéronef 10 est en dehors de la zone de portée, les secondes informations de pilotage sont enrichies, lors d'une étape 6325, d'une information indiquant que l'aéronef est en dehors de la zone de portée du tir.

Si l'aéronef 10 est dans la zone de portée, le module de traitement 113 met en œuvre l'étape 6324 déjà expliquée.

Si, lors de l'étape 6320, le module de traitement vérifie que l'évènement détecté n'est pas un tir, il en déduit que l'évènement détecté est une détection d'un feu de signalisation.

Dans une étape 6327, le module de traitement 113 détermine une zone d'évitement autour de la localisation géographique du feu de signalisation. Dans un mode de réalisation, le module de traitement 113 détermine la zone d'évitement en utilisant une distance prédéfinie représentant une distance minimale devant être maintenue entre la localisation géographique du feu de signalisation et l'aéronef 10. La zone d'évitement est alors une sphère ayant pour centre la localisation géographique du feu de signalisation. Des secondes informations de pilotage comprenant la position géographique du feu de signalisation et le rayon de la zone d'évitement sont conservées dans une mémoire du module de traitement 113.

Dans une étape 6328, le module de traitement 113 détermine si l'aéronef se dirige vers la zone d'évitement. Pour ce faire, le module de traitement utilise des informations d'orientation de l'aéronef 10 fournies, par exemple, par le dispositif de positionnement 114.

Si l'aéronef 10 se dirige vers la zone d'évitement, le module de traitement 113 détermine, lors d'une étape 6329, à partir d'informations de vitesse fournies, par exemple, par le dispositif de positionnement 114, un temps d'évitement. Le temps d'évitement est une estimation d'un temps qu'il faudrait à l'aéronef 10 pour atteindre la zone d'évitement s'il continuait à évoluer à la vitesse et suivant l'orientation fournie par le dispositif de positionnement 114. Les secondes informations de pilotage sont enrichies en y ajoutant le temps d'évitement déterminé.

Dans une étape 6330, le module de traitement 113 détermine au moins une direction d'évitement. Pour ce faire, le module de traitement détermine, en utilisant les informations représentatives d'obstacles fournies par la procédure d'aide au pilotage 62, au moins une direction permettant d'éviter la zone d'évitement, tout en évitant d'éventuels obstacles. Les secondes informations de pilotage sont enrichies en y ajoutant chaque direction d'évitement déterminée.

Si l'aéronef ne se dirige pas vers la zone d'évitement, lors d'une étape 6331, les secondes informations de pilotage sont enrichies en y ajoutant une information indiquant que l'aéronef ne se dirige pas vers la zone d'évitement.

Les informations d'aide au pilotage stockées en mémoire sont ensuite utilisées lors de l'étape 64 pour déterminer les informations d'aide au pilotage.

La **Fig.7** illustre schématiquement un deuxième exemple d'équipement aéroporté de détection de tirs et d'aide au pilotage 11. L'équipement aéroporté décrit en relation avec la Fig. 7 est apte à mettre en œuvre le procédé décrit en relation avec la Fig. 6A.

L'équipement aéroporté 11 décrit en relation avec la Fig. 2 comprend un dispositif LWIR/MWIR. Des contraintes de réalisation technique des dispositifs LWIR/MWIR, tels que les capteurs bolométriques, induisent qu'en général, ces capteurs ont une résolution faible, inférieure à une résolution des dispositifs NIR. Un dispositif d'acquisition LWIR/MWIR de type capteur bolométrique peut atteindre une résolution de « 1024 » pixels en largeur et « 768 » pixels en hauteur alors qu'un capteur NIR peut atteindre, par exemple, une résolution de « 2560 » pixels en largeur et de « 2160 » pixels en hauteur.

Les feux de bouche provoqués par un tir sont en général de petite taille, d'autant plus petite qu'ils sont vus par l'aéronef 10 depuis une position pouvant être relativement éloignée de l'origine du tir. Pour qu'un feu de bouche puisse être détecté sous forme de flash lumineux dans une image LWIR/MWIR, il est préférable que le dispositif d'acquisition LWIR/MWIR ait une résolution suffisante. Une résolution de « 1024 » par « 768 » est généralement jugée trop faible.

L'équipement aéroporté 11 décrit en relation avec la Fig. 7 comprend un système multi-capteurs comprenant quatre systèmes LWIR/MWIR 111A, 111B, 111C et 111D, un système NIR 112 et quatre dispositifs acoustiques 115A, 115B, 115C et 115D.

Chaque système LWIR/MWIR 111A, 111B, 111C et 111D comprend un dispositif d'acquisition LWIR/MWIR identique au dispositif d'acquisition 1111. Le dispositif optique LWIR/MWIR de chaque système LWIR/MWIR 111A, 111B, 111C et 111D couvre un champ optique correspondant à un quart du champ optique couvert par le dispositif optique LWIR/MWIR1110. Les systèmes LWIR/MWIR 111A, 111B, 111C et 111D sont agencés dans l'équipement aéroporté de telle sorte qu'en combinant les champs optiques couverts par les dispositifs optiques LWIR/MWIR des systèmes LWIR/MWIR 111A, 111B, 111C et 111D, on obtient un champ optique combiné identique au champ optique couvert par le dispositif optique NIR 1120. Par ailleurs, en combinant les images LWIR/MWIR fournies par les quatre systèmes LWIR/MWIR 111A, 111B, 111C et 111D, on obtient des images LWIR/MWIR ayant une résolution de « 2048 » pixels en largeur et « 1536 » pixels en hauteur. Par conséquent, en combinant les informations fournies par les quatre systèmes LWIR/MWIR 111A, 111B, 111C et 111D, on obtient un système équivalent à un système LWIR/MWIR couvrant un champ optique identique au champ optique couvert par le système NIR 1120 et fournissant des images ayant une résolution de « 2048 » pixels en largeur et « 1536 » pixels en hauteur.

Les quatre systèmes acoustiques 115A, 115B, 115C et 1115D sont identiques au système acoustique 115. Utiliser une pluralité de capteurs acoustiques permet d'améliorer une réception de sons environnant l'aéronef 10. Les capteurs acoustiques peuvent en effet être répartis sur l'équipement aéroporté 11 de manière à recevoir des sons provenant de multiples directions.

L'équipement aéroporté 11 décrit en relation avec la Fig. 7 comprend 3 bus de communication 110A, 110B et 110C reliés par un bus de communication 110D.

Le bus de communication 111A relie les dispositifs LWIR/MWIR 111A, 111B, 111C et 111D à un module de traitement 113A similaire au module de traitement 113 décrit en relation avec la Fig. 5.

Le bus de communication 111B relie le dispositif NIR 112, à un dispositif de traitement 113B similaire au module de traitement 113 décrit en relation avec la Fig. 5.

Le bus de communication 111C relie les quatre dispositifs acoustiques 115A, 115B, 115C et 115D à un module de traitement 113C similaire au module de traitement 113.

Lorsque l'équipement aéroporté 11 comprend un dispositif de positionnement 114 et un dispositif de synchronisation 116, le dispositif de positionnement 114 est connecté au bus 110A alors que le dispositif de synchronisation 116 est connecté au bus de communication 110D.

Dans un mode de réalisation, un module de traitement différent des modules de traitement 113A, 113B et 113C, dit module de traitement maître, centralise la mise en œuvre du procédé de la Fig. 6A. Le module de traitement maître est alors connecté au bus de communication 110D. Le module de traitement maître active et désactive les modules de traitement 113A, 113B et 113C pour qu'ils déclenchent l'acquisition des signaux LWIR/MWIR, NIR et acoustiques et pour qu'ils mettent en œuvre l'étape 630 décrite en relation avec la Fig. 6A et détaillée en relation avec la Fig. 6B.

L'étape 6300 permettant de rechercher une première singularité dans le signal LWIR/MWIR est mise en œuvre par le module de traitement 113A.

Suite à la mise en œuvre de l'étape 6300, le module de traitement 113A transmet un message au module de traitement maître indiquant si une première singularité a été détectée dans le signal LWIR/MWIR. Le module de traitement maître retransmet ce message au module de traitement 113B. En fonction d'un résultat de la recherche d'une première singularité, le module de traitement 113B met en œuvre l'étape 6301 ou l'étape 6308.

En fonction d'un résultat de la recherche d'une singularité dans le signal NIR dans l'étape 6301, le module de traitement 113B met en œuvre l'étape 6302 ou les étapes 6303 et 6304.

Suite à la mise en œuvre de l'étape 6304, le module de traitement 113B transmet un message au module de traitement maître contenant une information représentative de la localisation géographique de l'origine du tir. Le module de traitement maître retransmet ce message au module de traitement 113C. Le module de traitement 113C met alors en œuvre les étapes 6305, 6306 et 6307.

En fonction d'un résultat de la recherche d'une singularité dans le signal NIR dans l'étape 6308, le module de traitement 113B met en œuvre les étapes 6309 et 6310 ou transmet un message au module de traitement maître indiquant qu'aucune singularité n'a été trouvée dans les signaux LWIR/MWIR et NIR. Le module de traitement maître retransmet ce message au module de traitement 113C.

Suite à la réception de ce message, le module de traitement 113C met en œuvre les étapes 6311, 6312, 6313 et 6314.

Dans un mode de réalisation, le procédé décrit en relation avec la Fig. 6A est mis en œuvre par les modules de traitement 113A, 113B et 113C sans intervention d'un quatrième module de traitement. L'un des modules de traitement 113A, 113B et 113C est alors désigné module de traitement maître. Le module de traitement maître ainsi désigné met en œuvre les étapes 62, 64 et 632 et contrôle la mise en œuvre des étapes 61 et 630 par les modules de traitement 113A, 113B et 113C.

Dans un mode de réalisation, le module de traitement maître met en œuvre le procédé de la Fig. 6A. Dans ce mode de réalisation, les modules de traitement 113A, 113B et 113C n'assurent que la gestion de l'acquisition et de la mise en forme des signaux issus des dispositifs LWIR/MWIR, NIR et acoustiques en vue de leur utilisation par le module de traitement maître.

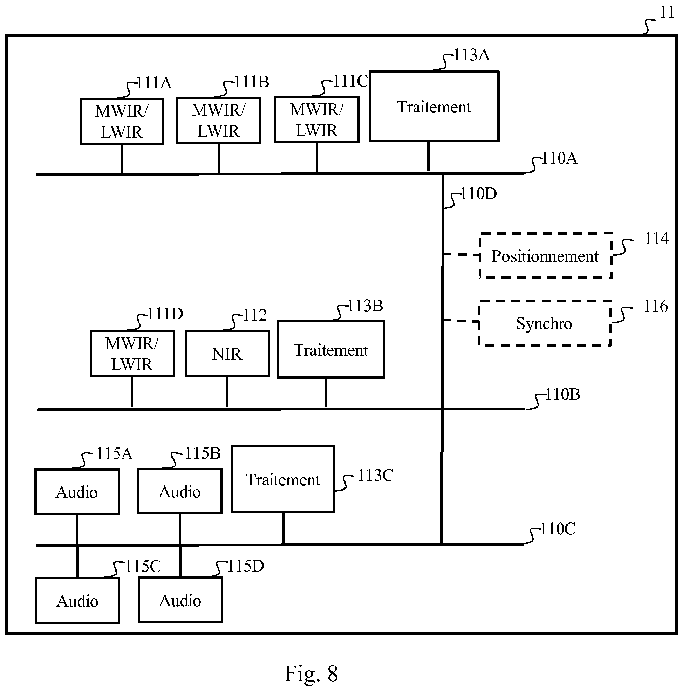

La **Fig. 8** illustre schématiquement un troisième exemple d'équipement aéroporté de détection de tirs et d'aide au pilotage 11. L'équipement aéroporté 11 décrit en relation avec la Fig. 8 est apte à mettre en œuvre le procédé décrit en relation avec la Fig. 6A.

L'équipement aéroporté 11 décrit en relation avec la Fig. 8 possède une configuration adaptée à une utilisation de modules de traitement matériels ayant des capacités de traitement limitées. Certains modules de traitement matériels ont des capacités de traitement limitées. Ces modules de traitement matériels ne peuvent traiter simultanément qu'un nombre limité de flux d'images. Bien que des modules de traitement matériel ayant des capacités de traitement supérieures existent, les modules de traitement matériels aux capacités limités sont toujours utilisés car ces modules possèdent une robustesse éprouvée et/ou parce qu'ils sont peu onéreux.

L'exemple d'équipement aéroporté 11 décrit en relation avec la Fig. 8 utilise des modules de traitement 113A et 113B capables de traiter simultanément trois flux d'images. Toutefois, l'équipement aéroporté 11 décrit en relation avec la Fig. 8 comprend un système multi-capteurs identique au système multi-capteurs de l'équipement aéroporté décrit en relation avec la Fig. 7.

Pour que l'équipement aéroporté 11 puisse traiter les signaux LWIR/MWIR et NIR simultanément, l'équipement aéroporté 11 utilise une configuration adaptée. Dans cette configuration, trois bus de communication 110A, 110B et 110C sont reliés par un bus de communication 110D.

Le bus de communication 111A relie les systèmes LWIR/MWIR 111A, 111B et 111C à un module de traitement 113A similaire au module de traitement 113 décrit en relation avec la Fig. 5.

Le bus de communication 111B relie le système LWIR/MWIR 111D et le système NIR 112, à un module de traitement 113B similaire au module de traitement 113 décrit en relation avec la Fig. 5.

Le bus de communication 111C relie les quatre dispositifs acoustiques 115A, 115B, 115C et 115D à un module de traitement 113C similaire au module de traitement 113 décrit en relation avec la Fig. 5. Lorsque l'équipement aéroporté 11 comprend un dispositif de positionnement 114 et un dispositif de synchronisation 116, le dispositif de positionnement 114 et le dispositif de synchronisation 116 sont connectés au bus de communication 110D.

En répartissant les systèmes LWIR/MWIR 111A, 111B, 111C et 111D et le système NIR 112 tel que décrit en relation avec la Fig. 8, chaque module de traitement 113A et 113B reçoit au maximum trois flux d'images.

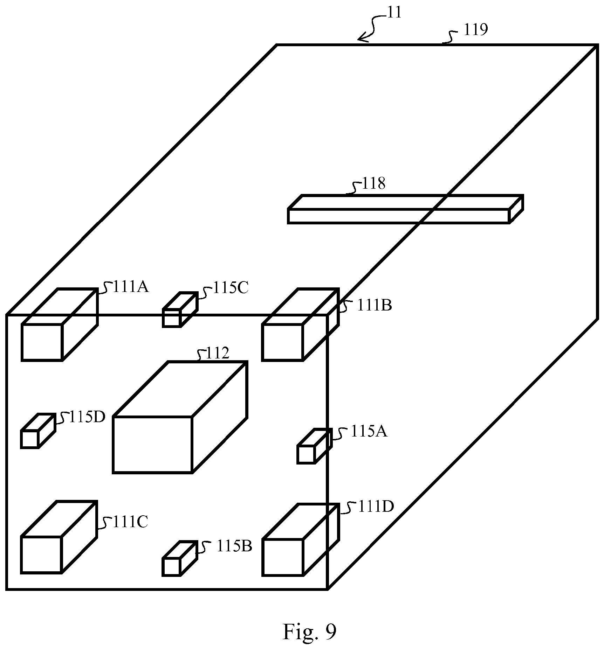

La **Fig. 9** illustre schématiquement un exemple d'implantation mécanique d'un équipement aéroporté de détection de tirs et d'aide au pilotage 11. L'équipement aéroporté 11 est par exemple l'un des équipements aéroportés 11A et 11B. Cet exemple d'implantation mécanique correspond aux exemples d'équipements aéroportés 11 décrits en relation avec les Figs. 7 et 8. Dans l'exemple de la Fig. 9, l'équipement aéroporté 11 comprend un boîtier 119 intégrant chaque élément constituant l'équipement aéroporté 11. Dans l'exemple décrit en relation avec la Fig. 9, le boîtier 119 possède une forme cubique. Il pourrait toutefois avoir une forme plus aérodynamique. Sur l'une des faces carrées de l'équipement aéroporté, dite face d'observation, dirigée vers la zone à observer, est positionné le système multi-capteurs.

Le système multi-capteurs comprend les quatre systèmes LWIR/MWIR 111A, 111B, 111C et 111D. Chaque système LWIR/MWIR 111A, 111B, 111C et 111D est situé dans un coin différent de la face carrée représentant la face d'observation.

Chaque dispositif optique LWIR/MWIR 1110 permet de couvrir un champ optique de « 60° » en horizontal et « 45° » en vertical. Chaque dispositif optique LWIR/MWIR 1110 et chaque capteur LWIR/MWIR 1111 sont orientés vers la zone à observer. La répartition des systèmes LWIR/MWIR 111A, 111B, 111C et 111D aux quatre coins de la face d'observation permet à l'équipement aéroporté 11 de fournir des images LWIR/MWIR représentant un champ optique de « 120° » en horizontal et de « 90° » en vertical avec une résolution de « 2048 » pixels en largeur et de « 1536 » pixels en hauteur.

Le système multi-capteurs comprend, de plus, un système NIR, situé au centre de la face carrée représentant la face d'observation de l'équipement aéroporté 11. Le dispositif d'acquisition NIR 1121 possède, par exemple, une résolution de « 2560 » pixels en largeur et de « 1920 » à « 2160 » pixels en hauteur. Par ailleurs, le dispositif optique NIR 1120 permet de couvrir un champ optique de « 120° » en horizontal et « 90° » en vertical identique au champ optique couvert par les systèmes LWIR/MWIR 111A, 111B, 111C et 111D.

Par ailleurs, l'équipement aéroporté 11 comprend quatre systèmes acoustiques (115A, 115B, 115C, 115D), répartis sur le boîtier 119 de manière à capter des sons émanant de plusieurs directions différentes.

L'équipement aéroporté 11 comprend de plus, un appareil de traitement 118. L'appareil de traitement 118 intègre les modules de traitement 113A, 113B et 113C ainsi que le module de traitement maître s'il est présent. Les systèmes LWIR/MWIR 111A, 111B, 111C, 111D, NIR 112, acoustiques 115A, 115B, 115C, 115D, et les dispositifs de positionnement 114 et de synchronisation 116 lorsqu'ils sont présents, sont reliés à l'appareil de traitement 118 par les bus de communication 110A, 110B, 110C et 110D.

Dans un mode de réalisation, l'aéronef 10 comprend une pluralité d'équipements aéroportés 11, tels que décrits en relation avec les Figs. 2, 7 et 8. Les équipements aéroportés implantés sur l'aéronef 10 sont en nombre suffisant et ont un positionnement adapté sur l'aéronef 10 permettant, en combinant les images LWIR/MWIR, d'obtenir une image représentative d'un panorama cylindrique, dit panorama cylindrique LWIR/MWIR, autour de l'aéronef 10 et permettant, en combinant les images NIR, d'obtenir une image représentative d'un panorama cylindrique, dit panorama NIR, autour de l'aéronef 10. Par exemple, dans le cas d'un aéronef comprenant des équipements aéroportés tel que décrit en relation avec la Fig. 7 ou 8, le champ optique couvert par le dispositif LWIR/MWIR étant de 120° en horizontal et le champ optique couvert par le dispositif NIR étant de 120° en horizontal, il faut répartir au moins trois équipements aéroportés 11 sur l'aéronef 10 pour assurer que le champ optique total soit de 360° autour de l'aéronef 10.

Dans un mode de réalisation, l'aéronef 10 comprend au moins quatre équipements aéroportés 11 tels que décrits en relation avec les Figs. 7 et 8. Les équipements aéroportés 11 sont positionnés de sorte à couvrir un champ optique total de 360° autour de l'aéronef 10. Par ailleurs, l'aéronef 10 possède un nombre d'équipements aéroportés 11 permettant des recouvrements de champs optiques sur certaines sous-parties du champ optique total. Les recouvrements de champs optiques permettent d'obtenir une vision stéréoscopique dans lesdites sous-parties du champ optique total.

La vision stéréoscopique peut être utilisée lors de la mise en œuvre des techniques de reconstruction 3D utilisant de la géométrie épipolaire, car elle permet de fournir des images d'une même scène à partir de points de vue différents.

La vision stéréoscopique peut aussi, par des méthodes connues, être utilisée pour déterminer une distance entre un obstacle et l'aéronef 10. Il suffit pour cela de connaître une taille réelle d'un objet de référence apparaissant dans les images LWIR/MWIR utilisées pour obtenir une reconstruction 3D d'un obstacle ou du terrain environnant l'aéronef 10. En calculant un ratio entre une taille apparente de l'objet de référence dans les images LWIR/MWIR et la taille réelle de l'objet de référence, il est possible de déterminer la distance entre l'objet de référence et l'aéronef 10. A partir de la distance entre l'objet de référence et l'aéronef 10 et de la reconstruction 3D d'un obstacle ou du terrain environnant l'aéronef 10, il est possible de remonter aux distances séparant l'aéronef 10 de tout autre objet contenu dans la reconstruction 3D. De plus, en mesurant des variations de la taille apparente de l'objet dans les images LWIR/MWIR, il est possible de déterminer une orientation et une vitesse relative de l'aéronef 10 par rapport à l'objet de référence.

Dans un mode de réalisation, l'équipement aéroporté ne comprend pas de dispositif de positionnement 114. La position, l'orientation et la vitesse de l'aéronef 10 sont déterminées par le module de traitement 113 ou le module de traitement maître en utilisant des informations fournies par la vision stéréoscopique.

## Revendications

1. Equipement aéroporté (11, 11A, 11B) de détection de tirs et d'aide au pilotage pour un aéronef (10), **caractérisé en ce qu'**il comprend:
- un système multi-capteurs fournissant des signaux représentatifs d'un environnement de l'aéronef comprenant : au moins un système (111), dit système LWIR/MWIR, fournissant un signal, dit signal LWIR/MWIR, représentatif d'un rayonnement infrarouge compris dans l'infrarouge lointain ou dans l'infrarouge moyen ; au moins un système (112), dit système NIR, fournissant un signal, dit signal NIR, représentatif d'un rayonnement infrarouge compris dans le proche infrarouge ; et, au moins un système acoustique (115) fournissant un signal acoustique ;
- des moyens de traitement (113, 113A, 113B, 113C) comprenant : des moyens d'aide au pilotage (62) permettant d'obtenir des premières informations de pilotage comprenant des informations représentatives d'obstacles présents dans l'environnement de l'aéronef; et, des moyens de détection de tirs (63) permettant d'obtenir des secondes informations de pilotage comprenant des informations représentatives de tirs dans un voisinage de l'aéronef, les moyens d'aide au pilotage et les moyens de détection de tirs utilisant des signaux représentatifs d'un environnement de l'aéronef comprenant au moins le signal LWIR/MWIR ; et,
- des moyens d'obtention (64) pour obtenir des paramètres d'aide au pilotage à partir de premières et secondes informations de pilotage;
les moyens de détection de tirs comprenant :
- des moyens (630) de recherche pour rechercher des singularités dans des signaux représentatifs d'un environnement de l'aéronef, comprenant des moyens (6300) pour rechercher une première singularité dans un premier signal compris dans les signaux représentatifs d'un environnement de l'aéronef et des moyens (6301, 6308) pour rechercher une deuxième singularité dans au moins un deuxième signal compris dans les signaux représentatifs d'un environnement de l'aéronef ;
- des moyens (6303, 6306, 6307, 6309, 6313) de détermination pour déterminer, en utilisant un résultat des moyens de recherche, si un évènement correspondant à un type d'évènement recherché a été détecté ;
- des moyens (6304, 6310, 6314) de localisation pour déterminer une localisation géographique d'une origine d'un évènement détecté utilisant des informations fournies par les moyens d'aide au pilotage ; et
- des moyens d'obtention pour obtenir (632) des secondes informations de pilotage en fonction d'un type d'un évènement détecté et d'une localisation géographique d'une origine dudit évènement.

2. Equipement aéroporté selon la revendication 1, **caractérisé en ce que** chaque système LWIR/MWIR comprend un dispositif optique (1110), dit dispositif optique LWIR/MWIR, et un dispositif d'acquisition (1111), dit dispositif d'acquisition LWIR/MWIR, fournissant un signal LWIR/MWIR sous forme d'images, dites images LWIR/MWIR, chaque système NIR comprend un dispositif optique (1120), dit dispositif optique NIR et un dispositif d'acquisition (1121), dit dispositif d'acquisition NIR, fournissant un signal NIR sous forme d'images, dites images NIR, le système multi-capteurs comprenant un nombre de systèmes LWIR/MWIR et de systèmes NIR dépendant d'une résolution respective des images LWIR/MWIR et NIR à obtenir.

3. Equipement selon la revendication 2, **caractérisé en ce que** chaque dispositif d'acquisition LWIR/MWIR comprend un capteur bolométrique apte à capter le signal LWIR/MWIR.

4. Aéronef (10) comprenant une pluralité d'équipements aéroportés selon la revendication 2 ou 3, permettant, en combinant les images LWIR/MWIR, d'obtenir une image représentative d'un panorama à 360°, dit panorama LWIR/MWIR, autour de l'aéronef et permettant, en combinant les images NIR, d'obtenir une image représentative d'un panorama à 360°, dit panorama NIR, autour de l'aéronef.

5. Procédé combiné d'aide au pilotage et de détection de tirs, mis en œuvre par un équipement aéroporté intégré à un aéronef (10), **caractérisé en ce que** le procédé comprend les étapes suivantes :
- acquérir (61) des signaux représentatifs d'un environnement de l'aéronef comprenant : un signal, dit signal LWIR/MWIR, représentatif d'un rayonnement infrarouge compris dans l'infrarouge lointain ou dans l'infrarouge moyen, fourni par un système (111), dit système LWIR/MWIR ; un signal, dit signal NIR, représentatif d'un rayonnement infrarouge compris dans le proche infrarouge, fourni par un système (112), dit système NIR; et, un signal acoustique fourni par un système acoustique (115) ;
- mettre en œuvre une procédure d'aide au pilotage (62) et une procédure de détection de tirs (63), la procédure d'aide au pilotage permettant d'obtenir des premières informations de pilotage comprenant des informations représentatives d'obstacles présents dans l'environnement de l'aéronef et la procédure de détection de tirs permettant d'obtenir des secondes informations de pilotage comprenant des informations représentatives de tirs dans un voisinage de l'aéronef, la procédure d'aide au pilotage et la procédure de détection de tirs utilisant des signaux représentatifs de l'environnement de l'aéronef comprenant au moins le signal LWIR/MWIR ;
- obtenir (64) des paramètres d'aide au pilotage à partir des premières et secondes informations de pilotage;
la procédure de détection de tirs comprenant les étapes suivantes :
- rechercher (630) des singularités dans les signaux représentatifs de l'environnement de l'aéronef, la recherche des singularités comprenant une recherche (6300) d'une première singularité dans un premier signal compris dans les signaux représentatifs de l'environnement de l'aéronef et, une recherche (6301) d'une deuxième singularité dans au moins un deuxième signal compris dans les signaux représentatifs d'un environnement de l'aéronef;
- lorsqu'un résultat de la recherche des singularités montre (6303) qu'un évènement correspondant à un type d'évènement recherché s'est produit, déterminer (6304) une localisation géographique d'une origine dudit évènement en utilisant des informations obtenues lors de la mise en œuvre de la procédure d'aide au pilotage ;
- obtenir (632) les secondes informations de pilotage en fonction dudit type et de la localisation géographique de l'origine dudit évènement.

6. Procédé selon la revendication 5, **caractérisé en ce que** le système NIR fournit le signal NIR sous forme d'images, dites images NIR, le système LWIR/MWIR fournit le signal LWIR/MWIR sous forme d'images, dites images LWIR/MWIR, et **en ce que** une singularité est présente dans le signal NIR lorsqu'un flash de lumière est détecté dans au moins une image NIR, une singularité est présente dans le signal LWIR/MWIR lorsqu'un flash de lumière est détecté dans au moins une image LWIR/MWIR, et une singularité est présente dans le signal acoustique lorsqu'une onde de Mach est détectée dans le signal acoustique.

7. Procédé selon la revendication 6, **caractérisé en ce que**, lorsque la recherche d'au moins une singularité dans les signaux représentatifs d'un environnement de l'aéronef permet de détecter un premier flash de lumière (6300) dans au moins une image LWIR/MWIR et un second flash de lumière (6301), corrélé spatialement et temporellement avec le premier flash de lumière, dans au moins une image NIR, l'évènement est identifié (6302) comme un reflet solaire et ne correspond pas à un évènement recherché.

8. Procédé selon la revendication 6, **caractérisé en ce que**, lorsque la recherche d'au moins une singularité dans les signaux représentatifs d'un environnement de l'aéronef permet de détecter un premier flash de lumière (6300) dans le signal LWIR/MWIR, aucun second flash de lumière corrélé avec le premier flash de lumière n'ayant été détecté dans le signal NIR, l'évènement est identifié (6303) comme un tir et correspond à un évènement recherché.

9. Procédé selon la revendication 8, **caractérisé en ce que**, lorsque, suite à l'identification (6303) d'un évènement correspondant à un tir et à la détermination (6304) de la localisation géographique de l'origine dudit évènement, une onde de Mach ayant une corrélation temporelle avec le premier flash de lumière est détectée (6305) dans le signal acoustique, l'évènement est identifié (6307) comme un tir en direction de l'aéronef, la localisation géographique de l'origine dudit évènement étant utilisée pour déterminer un niveau de corrélation temporelle entre le premier flash de lumière et l'onde de Mach.

10. Procédé selon la revendication 6, **caractérisé en ce que**, lorsque la recherche d'au moins une singularité dans les signaux représentatifs d'un environnement de l'aéronef permet de détecter un second flash de lumière (6308) dans le signal NIR, aucun premier flash de lumière corrélé avec le second flash de lumière n'ayant été détecté dans le signal LWIR/MWIR, l'évènement est identifié (6309) comme une détection d'un feu de signalisation et correspond à un évènement recherché.

11. Procédé selon l'une quelconque des revendications 6 à 10, **caractérisé en ce que**, une information de durée d'un flash de lumière est associée à chaque flash de lumière, la durée du flash de lumière étant utilisée pour affiner l'identification du type de l'évènement.

12. Procédé selon l'une quelconque des revendications 6 à 11, **caractérisé en ce que** une information de fréquence de répétition d'un flash de lumière est associée à chaque détection de flash de lumière, la fréquence de répétition étant utilisée pour affiner l'identification du type de l'évènement.

13. Procédé selon l'une quelconque des revendications 5 à 12, **caractérisé en ce que**, lorsque l'évènement identifié correspond à un tir (6303, 6313), les paramètres d'aide au pilotage obtenus comprennent une information représentative d'une zone de portée du tir et/ou une direction de sortie d'une zone de portée du tir.

14. Procédé selon l'une des revendications 5 à 12, **caractérisé en ce que**, lorsque l'évènement identifié correspond à une détection d'un feu de signalisation (6309), les paramètres d'aide au pilotage obtenus comprennent une information représentative d'une zone d'évitement du feu de signalisation et/ou une information représentative d'un temps d'évitement correspondant à une estimation d'un temps qu'il faudrait à l'aéronef pour atteindre une zone d'évitement du feu de signalisation et/ou une direction d'évitement d'une zone d'évitement du feu de signalisation.

15. Procédé selon l'une quelconque des revendications 5 à 14, **caractérisé en ce que** le procédé est mis en œuvre par l'équipement aéroporté selon la revendication 1 ou par chaque équipement aéroporté de l'aéronef selon la revendication 4.

16. Programme d'ordinateur, **caractérisé en ce qu'**il comprend des instructions pour mettre en œuvre, par un dispositif, le procédé selon l'une quelconque des revendications 5 à 14, lorsque ledit programme est exécuté par un processeur dudit dispositif.

17. Moyens de stockage, **caractérisés en ce qu'**ils stockent un programme d'ordinateur comprenant des instructions pour mettre en œuvre, par un dispositif, le procédé selon l'une quelconque des revendications 5 à 14, lorsque ledit programme est exécuté par un processeur dudit dispositif.

## Patentansprüche

1. Luftgestützte Einrichtung (11, 11A, 11B) zur Detektion von Schüssen und zur Steuerungsassistenz für ein Luftfahrzeug (10), **dadurch gekennzeichnet, dass** sie umfasst:
- ein Multi-Sensor-System, das Signale bereitstellt, die für ein Umfeld des Luftfahrzeugs repräsentativ sind, umfassend: mindestens ein System (111), LWIR/MWIR-System genannt, das ein Signal, LWIR/MWIR-Signal genannt, bereitstellt, das für eine im fernen Infrarot oder im mittleren Infrarot enthaltene Infrarotstrahlung repräsentativ ist; mindestens ein System (112), NIR-System genannt, das ein Signal, NIR-Signal genannt, bereitstellt, das für eine im nahen Infrarot enthaltene Infrarotstrahlung repräsentativ ist; und mindestens ein akustisches System (115), das ein akustisches Signal bereitstellt;
- Verarbeitungsmittel (113, 113A, 113B, 113C), umfassend: Steuerungsassistenzmittel (62), die es ermöglichen, erste Steuerungsinformationen zu erhalten, die Informationen umfassen, die für im Umfeld des Luftfahrzeugs vorhandene Hindernisse repräsentativ sind; und Schussdetektionsmittel (63), die es ermöglichen, zweite Steuerungsinformationen zu erhalten, die Informationen umfassen, die für Schüsse in einer Umgebung des Luftfahrzeugs repräsentativ sind, wobei die Steuerungsassistenzmittel und die Schussdetektionsmittel Signale verwenden, die für ein Umfeld des Luftfahrzeugs repräsentativ sind und mindestens das LWIR/MWIR-Signal umfassen; und
- Erhaltemittel (64) zum Erhalten der Steuerungsassistenzparameter ausgehend von ersten und zweiten Steuerungsinformationen;
wobei die Schussdetektionsmittel umfassen:
- Suchmittel (630) zum Suchen von Singularitäten in für ein Umfeld des Luftfahrzeugs repräsentativen Signalen, umfassend Mittel (6300) zum Suchen einer ersten Singularität in einem ersten Signal, das in den für ein Umfeld des Luftfahrzeugs repräsentativen Signalen enthalten ist, und Mittel (6301, 6308) zum Suchen einer zweiten Singularität in mindestens einem zweiten Signal, das in den für ein Umfeld des Luftfahrzeugs repräsentativen Signalen enthalten ist;
- Bestimmungsmittel (6303, 6306, 6307, 6309, 6313) zum Bestimmen, unter Verwendung eines Ergebnisses der Suchmittel, ob ein Ereignis, das einer gesuchten Ereignisart entspricht, detektiert worden ist;
- Lokalisierungsmittel (6304, 6310, 6314) zum Bestimmen einer geografischen Lokalisierung eines Ursprungs eines detektierten Ereignisses unter Verwendung der von den Steuerungsassistenzmitteln bereitgestellten Informationen; und
- Erhaltemittel zum Erhalten (632) der zweiten Steuerungsinformationen in Abhängigkeit von einer detektierten Ereignisart und einer geografischen Lokalisierung eines Ursprungs des Ereignisses.

2. Luftgestützte Einrichtung nach Anspruch 1, **dadurch gekennzeichnet, dass** jedes LWIR/MWIR-System eine optische Vorrichtung (1110), optische LWIR/MWIR-Vorrichtung genannt, und eine Erfassungsvorrichtung (1111), LWIR/MWIR-Erfassungsvorrichtung genannt, umfasst, die ein LWIR/MWIR-Signal in Form von Bildern, LWIR/MWIR-Bilder genannt, bereitstellen, wobei jedes NIR-System eine optische Vorrichtung (1120), optische NIR-Vorrichtung genannt, und eine Erfassungsvorrichtung (1121), NIR-Erfassungsvorrichtung genannt, umfasst, die ein NIR-Signal in Form von Bildern, NIR-Bilder genannt, bereitstellen, wobei das Multi-Sensor-System eine Anzahl von LWIR/MWIR-Systemen und von NIR-Systemen umfasst, die von einer jeweiligen Auflösung der zu erhaltenden LWIR/MWIR- und NIR-Bilder abhängt.

3. Einrichtung nach Anspruch 2, **dadurch gekennzeichnet, dass** jede LWIR/MWIR-Erfassungsvorrichtung einen bolometrischen Sensor umfasst, der geeignet ist, das LWIR/MWIR-Signal aufzufangen.

4. Luftfahrzeug (10), umfassend eine Vielzahl von luftgestützten Einrichtungen nach Anspruch 2 oder 3, die es durch Kombinieren der LWIR/MWIR-Bilder ermöglichen, ein Bild zu erhalten, das für ein 360°-Panorama, LWIR/MWIR-Panorama genannt, um das Luftfahrzeug herum repräsentativ ist, und es durch Kombinieren der NIR-Bilder ermöglichen, ein Bild zu erhalten, das für ein 360°-Panorama, NIR-Panorama genannt, um das Luftfahrzeug herum repräsentativ ist.

5. Kombiniertes Steuerungsassistenz- und Schussdetektionsverfahren, das von einer in ein Luftfahrzeug (10) integrierten luftgestützten Einrichtung ausgeführt wird, **dadurch gekennzeichnet, dass** das Verfahren die folgenden Schritte umfasst:
- Erfassen (61) der Signale, die für ein Umfeld des Luftfahrzeugs repräsentativ sind, und umfassen: ein Signal, LWIR/MWIR-Signal genannt, das für eine im fernen Infrarot oder im mittleren Infrarot enthaltene Infrarotstrahlung repräsentativ ist und von einem System (111), LWIR/MWIR-System genannt, bereitgestellt wird; ein Signal, NIR-Signal genannt, das für eine im nahen Infrarot enthaltene Infrarotstrahlung repräsentativ ist und von einem System (112), NIR-System genannt, bereitgestellt wird; und ein akustisches Signal, das von einem akustischen System (115) bereitgestellt wird;
- Ausführen eines Steuerungsassistenzverfahrens (62) und eines Schussdetektionsverfahrens (63), wobei das Steuerungsassistenzverfahren es ermöglicht, erste Steuerungsinformationen zu erhalten, die Informationen umfassen, die für im Umfeld des Luftfahrzeugs vorhandene Hindernisse repräsentativ sind, und das Schussdetektionsverfahren es ermöglicht, zweite Steuerungsinformationen zu erhalten, die Informationen umfassen, die für Schüsse in einer Umgebung des Luftfahrzeugs repräsentativ sind, wobei das Steuerungsassistenzverfahren und das Schussdetektionsverfahren Signale verwenden, die für das Umfeld des Luftfahrzeugs repräsentativ sind und mindestens das LWIR/MWIR-Signal umfassen;
- Erhalten (64) der Steuerungsassistenzparameter ausgehend von den ersten und zweiten Steuerungsinformationen;
wobei das Schussdetektionsverfahren die folgenden Schritte umfasst:
- Suchen (630) von Singularitäten in den für das Umfeld des Luftfahrzeugs repräsentativen Signalen, wobei das Suchen von Singularitäten ein Suchen (6300) einer ersten Singularität in einem ersten Signal, das in den für das Umfeld des Luftfahrzeugs repräsentativen Signalen enthalten ist, und ein Suchen (6301) einer zweiten Singularität in mindestens einem zweiten Signal, das in den für ein Umfeld des Luftfahrzeugs repräsentativen Signalen enthalten ist, umfasst;
- wenn ein Ergebnis der Suche von Singularitäten zeigt (6303), dass ein Ereignis, das einer gesuchten Ereignisart entspricht, eingetreten ist, Bestimmen (6304) einer geografischen Lokalisierung eines Ursprungs des Ereignisses unter Verwendung der bei der Ausführung des Steuerungsassistenzverfahrens erhaltenen Informationen;
- Erhalten (632) der zweiten Steuerungsinformationen in Abhängigkeit von der Art und der geografischen Lokalisierung des Ursprungs des Ereignisses.

6. Verfahren nach Anspruch 5, **dadurch gekennzeichnet, dass** das NIR-System das NIR-Signal in Form von Bildern, NIR-Bilder genannt, bereitstellt, das LWIR/MWIR- System das LWIR/MWIR-Signal in Form von Bildern, LWIR/MWIR-Bilder genannt, bereitstellt, und dass eine Singularität in dem NIR-Signal vorhanden ist, wenn ein Lichtblitz in mindestens einem NIR-Bild detektiert wird, eine Singularität in dem LWIR/MWIR-Signal vorhanden ist, wenn ein Lichtblitz in mindestens einem LWIR/MWIR-Bild detektiert wird, und eine Singularität in dem akustischen Signal vorhanden ist, wenn eine Machwelle in dem akustischen Signal detektiert wird.

7. Verfahren nach Anspruch 6, **dadurch gekennzeichnet, dass**, wenn das Suchen mindestens einer Singularität in den für ein Umfeld des Luftfahrzeugs repräsentativen Signalen es ermöglicht, einen ersten Lichtblitz (6300) in mindestens einem LWIR/MWIR-Bild und einen zweiten Lichtblitz (6301), der räumlich und zeitlich mit dem ersten Lichtblitz korreliert ist, in mindestens einem NIR-Bild zu detektieren, das Ereignis als Sonnenspiegelung identifiziert wird (6302) und nicht einem gesuchten Ereignis entspricht.

8. Verfahren nach Anspruch 6, **dadurch gekennzeichnet, dass**, wenn das Suchen mindestens einer Singularität in den für ein Umfeld des Luftfahrzeugs repräsentativen Signalen es ermöglicht, einen ersten Lichtblitz (6300) in dem LWIR/MWIR-Signal zu detektieren, während kein zweiter Lichtblitz, der mit dem ersten Lichtblitz korreliert ist, in dem NIR-Bild detektiert worden ist, das Ereignis als ein Schuss identifiziert wird (6303) und einem gesuchten Ereignis entspricht.

9. Verfahren nach Anspruch 8, **dadurch gekennzeichnet, dass**, wenn nach dem Identifizieren (6303) eines einem Schuss entsprechenden Ereignisses und dem Bestimmen (6304) der geografischen Lokalisierung des Ursprungs des Ereignisses eine Machwelle, die eine zeitliche Korrelation mit dem ersten Lichtblitz hat, in dem akustischen Signal detektiert (6305) wird, das Ereignis als ein Schuss in Richtung des Luftfahrzeugs identifiziert wird (6307), wobei die geografische Lokalisierung des Ursprungs des Ereignisses verwendet wird, um einen Grad der zeitlichen Korrelation zwischen dem ersten Lichtblitz und der Machwelle zu bestimmen.

10. Verfahren nach Anspruch 6, **dadurch gekennzeichnet, dass**, wenn das Suchen mindestens einer Singularität in den für ein Umfeld des Luftfahrzeugs repräsentativen Signalen es ermöglicht, einen zweiten Lichtblitz (6308) in dem NIR-Signal zu detektieren, während kein erster Lichtblitz, der mit zweiten Lichtblitz korreliert ist, in dem LWIR/MWIR-Signal detektiert worden ist, das Ereignis als eine Detektion eines Positionslichts identifiziert wird (6309) und einem gesuchten Ereignis entspricht.

11. Verfahren nach einem der Ansprüche 6 bis 10, **dadurch gekennzeichnet, dass** jedem Lichtblitz eine Information über die Dauer eines Lichtblitzes zugeordnet wird, wobei die Dauer des Lichtblitzes dazu verwendet wird, die Identifizierung der Art des Ereignisses zu verfeinern.

12. Verfahren nach einem der Ansprüche 6 bis 11, **dadurch gekennzeichnet, dass** jeder Lichtblitzdetektion eine Information über die Wiederholungsfrequenz eines Lichtblitzes zugeordnet wird, wobei die Wiederholungsfrequenz dazu verwendet wird, die Identifizierung der Art des Ereignisses zu verfeinern.

13. Verfahren nach einem der Ansprüche 5 bis 12, **dadurch gekennzeichnet, dass**, wenn das identifizierte Ereignis einem Schuss entspricht (6303, 6313), die erhaltenen Steuerungsassistenzparameter eine Information umfassen, die für einen Reichweitenbereich des Schusses und/oder eine Austrittsrichtung aus einem Reichweitenbereichs des Schusses repräsentativ ist.

14. Verfahren nach einem der Ansprüche 5 bis 12, **dadurch gekennzeichnet, dass**, wenn das identifizierte Ereignis einer Detektion eines Positionslichts entspricht (6309), die erhaltenen Steuerungsassistenzparameter eine Information umfassen, die für einen Ausweichbereich des Positionslichts repräsentativ ist, und/oder eine Information, die für eine Ausweichzeit repräsentativ ist, die einer Schätzung einer Zeit entspricht, die das Luftfahrzeug benötigen würde, um einen Ausweichbereich des Positionslichts zu erreichen, und/oder einer Ausweichrichtung eines Ausweichbereichs eines Positionslichts.

15. Verfahren nach einem der Ansprüche 5 bis 14, **dadurch gekennzeichnet, dass** das Verfahren von der luftgestützten Einrichtung nach Anspruch 1 oder von jeder luftgestützten Einrichtung des Luftfahrzeugs nach Anspruch 4 ausgeführt wird.

16. Computerprogramm, **dadurch gekennzeichnet, dass** es Befehle umfasst, die bei der Ausführung des Programms durch einen Prozessor der Vorrichtung die Vorrichtung veranlassen, das Verfahren nach einem der Ansprüche 5 bis 14 auszuführen.

17. Speichermittel, **dadurch gekennzeichnet, dass** sie ein Computerprogramm speichern, das Befehle umfasst, die bei der Ausführung des Programms durch einen Prozessor der Vorrichtung die Vorrichtung veranlassen, das Verfahren nach einem der Ansprüche 5 bis 14 auszuführen.

## Claims

1. Airborne apparatus (11, 11A, 11B) for detecting shots and for piloting assistance for an aircraft (10), **characterized in that** it comprises:
- a multi-sensor system providing signals representative of an environment of the aircraft comprising: at least one system (111), called LWIR/MWIR system, providing a signal, called LWIR/MWIR signal, representative of infrared radiation in the far infrared or in the medium infrared; at least one system (112), called NIR system, providing a signal, called NIR signal, representative of infrared radiation in the near infrared; and, at least one acoustic system (115) providing an acoustic signal;
- processing means (113, 113A, 113B, 113C) comprising: piloting assistance means (62) making it possible to obtain first piloting information comprising information representative of obstacles present in the environment of the aircraft; and, shot detection means (63) making it possible to obtain second piloting information comprising information representative of shots in a vicinity of the aircraft, the piloting assistance means and the shot detection means using signals representative of an environment of the aircraft comprising at least the LWIR/MWIR signal; and,
- obtaining means (64) for obtaining piloting assistance parameters from first and second piloting information;
the shot detection means comprising:
- searching means (630) for searching for singularities in signals representative of an environment of the aircraft, comprising means (6300) for searching for a first singularity in a first signal in the signals representative of an environment of the aircraft and means (6301, 6308) for searching for a second singularity in at least a second signal in the signals representative of an environment of the aircraft;
- determining means (6303, 6306, 6307, 6309, 6313) for determining, using a result of the searching means, whether an event corresponding to a type of event sought has been detected;
- locating means (6304, 6310, 6314) for determining a geographical location of an origin of an event detected using information provided by the piloting assistance means; and
- obtaining means for obtaining (632) second piloting information according to a type of an event detected and a geographical location of an origin of said event.

2. Airborne apparatus according to Claim 1, **characterized in that** each LWIR/MWIR system comprises an optical device (1110), called LWIR/MWIR optical device, and an acquisition device (1111), called LWIR/MWIR acquisition device, providing an LWIR/MWIR signal in the form of images, called LWIR/MWIR images, each NIR system comprises an optical device (1120), called NIR optical device, and an acquisition device (1121), called NIR acquisition device, providing an NIR signal in the form of images, called NIR images, the multi-sensor system comprising a number of LWIR/MWIR systems and of NIR systems depending on a respective resolution of the LWIR/MWIR and NIR images to be obtained.

3. Apparatus according to Claim 2, **characterized in that** each LWIR/MWIR acquisition device comprises a bolometric sensor capable of picking up the LWIR/MWIR signal.

4. Aircraft (10) comprising a plurality of airborne apparatuses according to Claim 2 or 3, making it possible, by combining the LWIR/MWIR images, to obtain an image representative of a 360° panorama, called LWIR/MWIR panorama, around the aircraft and making it possible, by combining the NIR images, to obtain an image representative of a 360° panorama, called NIR panorama, around the aircraft.

5. Combined method for piloting assistance and for detecting shots, implemented by an airborne apparatus integrated into an aircraft (10), **characterized in that** the method comprises the following steps:
- acquiring (61) signals representative of an environment of the aircraft comprising: a signal, called LWIR/MWIR signal, representative of infrared radiation in the far infrared or in the medium infrared, provided by a system (111), called LWIR/MWIR system; a signal, called NIR signal, representative of infrared radiation in the near infrared, provided by a system (112), called NIR system; and, an acoustic signal provided by an acoustic system (115);
- implementing a piloting assistance procedure (62) and a shot detection procedure (63), the piloting assistance procedure making it possible to obtain first piloting information comprising information representative of obstacles present in the environment of the aircraft and the shot detection procedure making it possible to obtain second piloting information comprising information representative of shots in a vicinity of the aircraft, the piloting assistance procedure and the shot detection procedure using signals representative of the environment of the aircraft comprising at least the LWIR/MWIR signal;
- obtaining (64) piloting assistance parameters from the first and second piloting information;
the shot detection procedure comprising the following steps:
- searching (630) for singularities in the signals representative of the environment of the aircraft, the search for singularities comprising searching (6300) for a first singularity in a first signal in the signals representative of the environment of the aircraft and, searching (6301) for a second singularity in at least a second signal in the signals representative of an environment of the aircraft;
- when a result of the search for singularities shows (6303) that an event corresponding to a type of event sought has occurred, determining (6304) a geographical location of an origin of said event using information obtained during the implementation of the piloting assistance procedure;
- obtaining (632) the second piloting information according to said type and the geographical location of the origin of said event.

6. Method according to Claim 5, **characterized in that** the NIR system provides the NIR signal in the form of images, called NIR images, the LWIR/MWIR system provides the LWIR/MWIR signal in the form of images, called LWIR/MWIR images, and **in that** a singularity is present in the NIR signal when a flash of light is detected in at least one NIR image, a singularity is present in the LWIR/MWIR signal when a flash of light is detected in at least one LWIR/MWIR image, and a singularity is present in the acoustic signal when a Mach wave is detected in the acoustic signal.

7. Method according to Claim 6, **characterized in that**, when the search for at least one singularity in the signals representative of an environment of the aircraft makes it possible to detect a first flash of light (6300) in at least one LWIR/MWIR image and a second flash of light (6301), spatially and temporally correlated with the first flash of light, in at least one NIR image, the event is identified (6302) as a solar reflection and does not correspond to an event sought.

8. Method according to Claim 6, **characterized in that**, when the search for at least one singularity in the signals representative of an environment of the aircraft makes it possible to detect a first flash of light (6300) in the LWIR/MWIR signal, no second flash of light correlated with the first flash of light having been detected in the NIR signal, the event is identified (6303) as a shot and corresponds to an event sought.

9. Method according to Claim 8, **characterized in that**, when, following the identification (6303) of an event corresponding to a shot and the determination (6304) of the geographical location of the origin of said event, a Mach wave having a temporal correlation with the first flash of light is detected (6305) in the acoustic signal, the event is identified (6307) as a shot in the direction of the aircraft, the geographical location of the origin of said event being used to determine a level of temporal correlation between the first flash of light and the Mach wave.

10. Method according to Claim 6, **characterized in that**, when the search for at least one singularity in the signals representative of an environment of the aircraft makes it possible to detect a second flash of light (6308) in the NIR signal, no first flash of light correlated with the second flash of light having been detected in the LWIR/MWIR signal, the event is identified (6309) as a detection of a position light and corresponds to an event sought.

11. Method according to any one of Claims 6 to 10, **characterized in that** information on the duration of a flash of light is associated with each flash of light, the duration of the flash of light being used to refine the identification of the type of the event.

12. Method according to any one of Claims 6 to 11, **characterized in that** information on the frequency of repetition of a flash of light is associated with each detection of a flash of light, the frequency of repetition being used to refine the identification of the type of the event.

13. Method according to any one of Claims 5 to 12, **characterized in that**, when the event identified corresponds to a shot (6303, 6313), the piloting assistance parameters obtained comprise information representative of a range area of the shot and/or a direction of exit from a range area of the shot.

14. Method according to one of Claims 5 to 12, **characterized in that**, when the event identified corresponds to a detection of a position light (6309), the piloting assistance parameters obtained comprise information representative of an avoidance area for the position light and/or information representative of an avoidance time corresponding to an estimate of the time the aircraft would need to reach an avoidance area for the position light and/or a an avoidance direction of an avoidance area for the position light.

15. Method according to any one of Claims 5 to 14, **characterized in that** the method is implemented by the airborne apparatus according to Claim 1 or by each airborne apparatus of the aircraft according to Claim 4.

16. Computer program, **characterized in that** it comprises instructions for implementing, by a device, the method according to any one of Claims 5 to 14, when said program is executed by a processor of said device.

17. Storage means, **characterized in that** they store a computer program comprising instructions for implementing, by a device, the method according to any one of Claims 5 to 14, when said program is executed by a processor of said device.
